(19) **Europäisches Patentamt / European Patent Office / Office européen des brevets**

(11) **EP 4 184 799 A1**

(12) **EUROPEAN PATENT APPLICATION**
published in accordance with Art. 153(4) EPC

(43) Date of publication:
**24.05.2023 Bulletin 2023/21**

(21) Application number: **21842106.3**

(22) Date of filing: **15.07.2021**

(51) International Patent Classification (IPC):
**H04B 7/06** (2006.01)

(52) Cooperative Patent Classification (CPC):
**H04B 7/06; H04B 7/08; H04B 7/26; H04W 24/02**

(86) International application number:
**PCT/CN2021/106522**

(87) International publication number:
**WO 2022/012632 (20.01.2022 Gazette 2022/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.07.2020   CN 202010688720**

(71) Applicant: **Vivo Mobile Communication Co., Ltd.
Dongguan, Guangdong 523863 (CN)**

(72) Inventors:
• **YUAN, Pu**
  **Dongguan, Guangdong 523863 (CN)**
• **JIANG, Dajie**
  **Dongguan, Guangdong 523863 (CN)**
• **LIU, Hao**
  **Dongguan, Guangdong 523863 (CN)**

(74) Representative: **Raffay & Fleck
Patentanwälte
Grosse Bleichen 8
20354 Hamburg (DE)**

(54) **INFORMATION SENDING METHOD AND RECEIVING METHOD, AND COMMUNICATION DEVICE**

(57)   The present application discloses an information sending method and receiving method, and a communication device, belonging to the field of wireless communication technology. The information sending method comprises: performing OVXDM or FTN waveform coding on data, to generate coded information and send same, the coded information being generated and/or sent on the basis of signal parameters; receiving feedback information sent by a receiving terminal of the coded information; and adjusting the signal parameters according to the feedback information.

FIG. 4

**Description**

**CROSS-REFERENCE TO RELATED APPLICATIONS**

This application claims priority to Chinese Patent Application No. 202010688720.7 filed on July 16, 2020, which is incorporated herein by reference in its entirety.

**TECHNICAL FIELD**

This application relates to the field of wireless communication technologies, and in particular, to an information sending method, an information receiving method, and a communication device.

**BACKGROUND**

In related technologies, an overlapped x-domain multiplexing (Overlapped X-Domain Multiplexing, OVXDM)/faster-than-Nyquist (Faster-than-Nyquist, FTN) technology artificially introduces inter symbol interference (Inter Symbol Interference, ISI) and/or inter carrier interference (Inter Carrier interference, ICI) in a time/frequency domain based on a waveform encoding theory, to improve a symbol transmission rate and increase an equivalent channel capacity. However, a waveform coded signal requires higher performance of a receiver, increasing the complexity of a decoding algorithm and power consumption of hardware. Generally, a larger overlapped time/frequency domain coefficient (which is referred to as a quantity of overlapped time domain layers) during waveform encoding, that is, more serious artificially introduced ISI and ICI, indicates that more states need to be determined on the receiver side and the complexity of the receiving algorithm is higher. For example, the receiver complexity of the OVTDM waveform grows exponentially with the increase of the overlapped time domain coefficient.

In related technologies, an overlapped x-domain multiplexing (Overlapped X-Domain Multiplexing, OVXDM)/faster-than-Nyquist (Faster-than-Nyquist, FTN) technology artificially introduces inter symbol interference (Inter Symbol Interference, ISI) and/or inter carrier interference (Inter Carrier interference, ICI) in a time/frequency domain based on a waveform coding theory, to improve a symbol transmission rate and increase an equivalent channel capacity. However, a waveform coded signal requires higher performance of a receiver, increasing the complexity of a decoding algorithm and power consumption of hardware. Generally, a larger overlapped time/frequency domain coefficient (which is referred to as a quantity of overlapped time domain layers) during waveform encoding, that is, more serious artificially introduced ISI and ICI, indicates that more states need to be determined on the receiver side and the complexity of the receiving algorithm is higher. For example, the receiver complexity of the OVTDM waveform grows exponentially with the increase of the overlapped time domain coefficient.

**SUMMARY**

An objective of embodiments of this application is to provide an information sending method, an information receiving method, and a communication device, which can resolve a problem of high decoding complexity.

To resolve the foregoing technical problems, this application is implemented as follows:

According to a first aspect, an information sending method is provided, applicable to a communication device, and including:

performing OVXDM or FTN waveform encoding on data, and generating and sending encoded information, where the encoded information is generated and/or sent based on a signal parameter;
receiving feedback information sent by a receive end of the encoded information; and
adjusting the signal parameter according to the feedback information.

According to a second aspect, an information receiving method is provided, applicable to a communication device, and including:

receiving encoded information sent by a transmit end, where the encoded information is generated by the transmit end performing OVXDM or FTN waveform encoding on data, and the encoded information is generated and/or sent based on a signal parameter;
decoding the encoded information, and determining feedback information; and
sending the feedback information to the transmit end, where the feedback information is used for adjusting the signal parameter.

According to a third aspect, an information sending apparatus is provided, comprising:

a first sending module, configured to perform OVXDM or FTN waveform encoding on data, and generate and send encoded information, where the encoded information is generated and/or sent based on a signal parameter;

a first receiving module, configured to receive feedback information sent by a receive end of the encoded information; and

an adjustment module, configured to adjust the signal parameter according to the feedback information.

Optionally, the signal parameter includes at least one of the following:

an overlapped time domain coefficient $\tau$;
a symbol modulation order corresponding to $\tau$;
K_1 defined by OVXDM;
K defined by OVXDM or K_2 defined by cascaded OVXDM;
a symbol modulation order corresponding to K or K_2;
an overlapped frequency domain coefficient $\zeta$;
N defined by OVXDM;
a symbol modulation order corresponding to N;
a bit rate at which the encoded information is sent; and
a parameter of a filter.

Optionally, the information sending apparatus further includes:
a second sending module, configured to send first information to the receive end, where the first information includes the signal parameter or indication information of the signal parameter.

Optionally, if the communication device is a network-side device, the first information is sent in one of the following manners:

through a PDCCH;
indicated by a Dedicated-RRC message in a PDSCH;
indicated by a broadcast message;
indicated by the broadcast message and the Dedicated-RRC message; and
indicated by the broadcast message and DCI; and
if the communication device is a terminal, the first information is sent in one of the following manners:

indicated by a PSCCH;
indicated in a PSSCH; and
indicated by a broadcast message.

Optionally, the second sending module is configured to send a signal parameter and index value correspondence table by using the broadcast message; and send an index value of the signal parameter corresponding to the encoded information by using the Dedicated-RRC message or the DCI.

Optionally, the feedback information is second information or feedback information used for feeding back whether the encoded information is successfully parsed, where
the second information is one of the following:

first-type second information, where the first-type second information includes at least one of the following: a bit error rate and a channel measurement parameter, where the channel measurement parameter is a parameter affecting equivalent ISI and/or equivalent ICI in a channel; and

second-type second information, where the second-type second information includes: a suggested signal parameter or indication information of a suggested signal parameter.

Optionally, if the communication device is a network-side device, the second information is received in at least one of the following manners:

a PUSCH;
a PUCCH; and
a PLTFCH; and
if the communication device is a terminal, the second information is received in at least one of the following manners:

a PSSCH;
a PSCCH; and
a PSFCH.

Optionally, the channel measurement parameter includes at least one of the following: a signal to interference plus noise ratio, a multipath quantity, a residual frequency offset, a Doppler frequency shift, and a relative speed.

Optionally, the indication information of the suggested signal parameter is an index value of a signal parameter; and the adjustment module is configured to search a signal parameter and index value correspondence table according to a received index value of the suggested signal parameter, and determine a signal parameter corresponding to the received index value; and adjust a current signal parameter according to the signal parameter corresponding to the received index value.

Optionally, the signal parameter and index value correspondence table is agreed on in a protocol or is configured by the communication device.

Optionally, the indication information of the suggested signal parameter is indication information used for indicating increasing or decreasing of a signal parameter; and the adjustment module is configured to increase or decrease a current signal parameter according to a preset stepping according to the indication information of the suggested signal parameter.

Optionally, the feedback information is the feedback information used for feeding back whether the encoded information is successfully parsed, and the feedback information includes a negative acknowledgement NACK message indicating that the encoded information is not successfully parsed; and the adjustment module is configured to adjust the signal parameter if a proportion or a quantity of NACK messages within a preset time period or within a preset quantity of subframes or slots is greater than a preset threshold.

Optionally, the information sending apparatus further includes:
a third sending module, configured to send third information to the receive end, where the third information includes an adjusted signal parameter or indication information of an adjusted signal parameter.

Optionally, if the communication device is a network-side device, the third information is sent in one of the following manners:

indicated by a PDCCH;
indicated by a Dedicated-RRC message in a PDSCH;
indicated by a broadcast message;
indicated by the broadcast message and the Dedicated-RRC message; and
indicated by the broadcast message and DCI; and
if the communication device is a terminal, the third information is sent in one of the following manners:

indicated by a PSCCH;
indicated in a PSSCH; and
indicated by a broadcast message.

Optionally, the information sending apparatus further includes: a fourth sending module, configured to send a pilot signal, where the pilot signal includes at least one of the following: a synchronization signal, a channel state information-reference signal, or a preset reference signal.

According to a fourth aspect, an information receiving apparatus is provided, including:

a first receiving module, configured to receive encoded information sent by a transmit end, where the encoded information is generated by the transmit end performing OVXDM or FTN waveform encoding on data, and the encoded information is generated and/or sent based on a signal parameter;
a first determining module, configured to decode the encoded information, and determine feedback information; and
a first sending module, configured to send the feedback information to the transmit end, where the feedback information is used for adjusting the signal parameter.

Optionally, the signal parameter includes at least one of the following:

an overlapped time domain coefficient $\tau$;
a symbol modulation order corresponding to $\tau$;
K_1 defined by OVXDM;
K defined by OVXDM or K_2 defined by cascaded OVXDM;
a symbol modulation order corresponding to K or K_2;

an overlapped frequency domain coefficient $\zeta$;
N defined by OVXDM;
a symbol modulation order corresponding to N;
a bit rate at which the encoded information is sent; and
a parameter of a filter.

Optionally, the feedback information is second information or feedback information used for feeding back whether the encoded information is successfully parsed, where
the second information is one of the following:

first-type second information, where the first-type second information includes at least one of the following: a bit error rate and a channel measurement parameter, where the channel measurement parameter is a parameter affecting equivalent ISI and/or equivalent ICI in a channel; and
second-type second information, where the second-type second information includes: a suggested signal parameter or indication information of a suggested signal parameter.

Optionally, if the communication device is a terminal in an uplink and a downlink, the second information is sent in at least one of the following manners:

a PUSCH;
a PUCCH; and
a PUFCH; and
if the communication device is a terminal in a sidelink, the second information is sent in at least one of the following manners:

a PSSCH;
a PSCCH; and
a PSFCH.

Optionally, the channel measurement parameter includes at least one of the following: a signal to interference plus noise ratio, a multipath quantity, a residual frequency offset, a Doppler frequency shift, and a relative speed.

Optionally, the information receiving apparatus further includes:

a second receiving module, configured to receive a pilot signal sent by the transmit end, where the pilot signal includes at least one of the following: a synchronization signal, a channel state information-reference signal, or a preset reference signal; and
a measurement module, configured to measure a channel according to the pilot signal, to obtain the channel measurement parameter.

Optionally, when the second information is the second-type second information, the information receiving module further includes:

a first obtaining module, configured to obtain reference information, where the reference information includes at least one of the following: the channel measurement parameter, the bit error rate, and a capability of the communication device; and
a second determining module, configured to determine the suggested signal parameter according to the reference information.

Optionally, the indication information of the suggested signal parameter is an index value of a signal parameter or indication information used for indicating increasing or decreasing of a signal parameter.

Optionally, the information receiving apparatus further includes:

a third receiving module, configured to receive first information sent by the transmit end, where the first information includes the signal parameter corresponding to the encoded information or indication information of the signal parameter; and
the first determining module, configured to decode the encoded information according to the signal parameter corresponding to the encoded information and indicated by the first information.

Optionally, if the communication device is a terminal in an uplink and a downlink, the first information is received in at least one of the following manners:

through a PDCCH;
indicated by a Dedicated-RRC message in a PDSCH;
indicated by a broadcast message;
indicated by the broadcast message and the Dedicated-RRC message; and
indicated by the broadcast message and DCI; and
if the communication device is a terminal in a sidelink, the first information is received in one of the following manners:

indicated by a PSCCH;
indicated in a PSSCH; and
indicated by a broadcast message.

Optionally, the third receiving module is configured to receive, by using the broadcast message, a signal parameter and index value correspondence table sent by the transmit end; and receive, by using the Dedicated-RRC message or the DCI, an index value of the signal parameter corresponding to the encoded information sent by the transmit end.

Optionally, the information receiving apparatus further includes:

a fourth receiving module, configured to receive third information sent by the transmit end, where the third information includes an adjusted signal parameter or indication information of an adjusted signal parameter.

Optionally, if the communication device is a terminal in an uplink and a downlink, the third information is received in at least one of the following manners:

indicated by a PDCCH;
indicated by a Dedicated-RRC message in a PDSCH;
indicated by a broadcast message;
indicated by the broadcast message and the Dedicated-RRC message; and
indicated by the broadcast message and DCI; and
if the communication device is a terminal in a sidelink, the first information is received in one of the following manners:

indicated by a PSCCH;
indicated in a PSSCH; and
indicated by a broadcast message.

According to a fifth aspect, an information receiving method is provided, including:

receiving encoded information sent by a transmit end, where the encoded information is generated by the transmit end performing OVXDM or FTN waveform encoding on data, and the encoded information is generated and/or sent based on a signal parameter;
receiving first information and the encoded information sent by the transmit end, where the first information includes the signal parameter corresponding to the encoded information or indication information of the signal parameter; and
decoding the encoded information according to the signal parameter corresponding to the encoded information and indicated by the first information.

According to a sixth aspect, an information receiving apparatus is provided, including:

a first receiving module, configured to receive encoded information sent by a transmit end, where the encoded information is generated by the transmit end performing OVXDM or FTN waveform encoding on data, and the encoded information is generated and/or sent based on a signal parameter;
a second receiving module, configured to receive first information sent by the transmit end, where the first information includes the signal parameter corresponding to the encoded information or indication information of the signal parameter; and
a determining module, configured to decode the encoded information according to the signal parameter corresponding to the encoded information and indicated by the first information and determine feedback information.

Optionally, the signal parameter includes at least one of the following:

an overlapped time domain coefficient $\tau$;
a symbol modulation order corresponding to $\tau$;
K_1 defined by OVXDM;
K defined by OVXDM or K_2 defined by cascaded OVXDM;
a symbol modulation order corresponding to K or K_2;
an overlapped frequency domain coefficient $\zeta$;
N defined by OVXDM;
a symbol modulation order corresponding to N;
a bit rate at which the encoded information is sent; and
a parameter of a filter.

Optionally, if the communication device is a terminal in an uplink and a downlink, the first information is received in at least one of the following manners:

through a PDCCH;
indicated by a Dedicated-RRC message in a PDSCH;
indicated by a broadcast message;
indicated by the broadcast message and the Dedicated-RRC message; and
indicated by the broadcast message and DCI; and
if the communication device is a terminal in a sidelink, the first information is received in one of the following manners:

indicated by a PSCCH;
indicated in a PSSCH; and
indicated by a broadcast message.

According to a seventh aspect, an information sending method is provided, including:

sending first information; and
performing OVXDM or FTN waveform encoding on data, and generating and sending encoded information, where the encoded information is generated and/or sent based on a signal parameter, and the first information includes the signal parameter or indication information of the signal parameter.

According to an eighth aspect, an information sending apparatus is provided, including:

a first sending module, configured to send first information; and
a second sending module, configured to perform OVXDM or FTN waveform encoding on data, and generate and send encoded information, where the encoded information is generated and/or sent based on a signal parameter, and the first information includes the signal parameter or indication information of the signal parameter.

Optionally, the signal parameter includes at least one of the following:

an overlapped time domain coefficient $\tau$;
a symbol modulation order corresponding to $\tau$;
K_1 defined by OVXDM;
K defined by OVXDM or K_2 defined by cascaded OVXDM;
a symbol modulation order corresponding to K or K_2;
an overlapped frequency domain coefficient $\zeta$;
N defined by OVXDM;
a symbol modulation order corresponding to N;
a bit rate at which the encoded information is sent; and
a parameter of a filter.

Optionally, if the communication device is a network-side device, the first information is sent in one of the following manners:

through a PDCCH;
indicated by a Dedicated-RRC message in a PDSCH;
indicated by a broadcast message;

indicated by the broadcast message and the Dedicated-RRC message; and
indicated by the broadcast message and DCI; and
if the communication device is a terminal, the first information is sent in one of the following manners:

indicated by a PSCCH;
indicated in a PSSCH; and
indicated by a broadcast message.

According to a ninth aspect, a communication device is provided, including a processor, a memory, and programs or instructions stored in the memory and executable on the processor, where the programs or the instructions are executed by the processor to implement the steps of the information sending method according to the first aspect, or the programs or the instructions are executed by the processor to implement the steps of the information receiving method according to the second aspect, or the programs or the instructions are executed by the processor to implement the steps of the information receiving method according to the fifth aspect, or the programs or the instructions are executed by the processor to implement the steps of the information sending method according to the seventh aspect.

According to a tenth aspect, a readable storage medium is provided, storing programs or instructions, where the programs or the instructions are executed by a processor to implement the steps of the information sending method according to the first aspect, or implement the steps of the information receiving method according to the second aspect, or implement the steps of the information receiving method according to the fifth aspect, or implement the steps of the information sending method according to the seventh aspect.

According to an eleventh aspect, a chip, including a processor and a communication interface, where the communication interface is coupled to the processor, and the processor is configured to run programs or instructions of a network-side device, to implement the information sending method according to the first aspect, or implement the information receiving method according to the second aspect, or implement the information receiving method according to the fifth aspect, or implement the information sending method according to the seventh aspect.

In the embodiments of this application, a transmit end of encoded information may dynamically adjust a signal parameter related to generation and/or sending of the encoded information according to feedback information from a receive end, to improve transmission performance and control decoding complexity of the receive end, thereby ensuring that decoding is performed accurately and efficiently. In addition, the transmit end of the encoded information may indicate the signal parameter corresponding to the encoded information to the receive end, and the receive end determines a decoding algorithm according to the signal parameter, to control the decoding complexity of the receive end, thereby ensuring that decoding is performed accurately and efficiently.

## BRIEF DESCRIPTION OF THE DRAWINGS

FIG. 1 is a block diagram of a wireless communication system to which an embodiment of this application is applicable.
FIG. 2 is a schematic diagram of an implementation solution of serial cascaded OVTDM.
FIG. 3 is a schematic diagram of comparison between a signal without an overlapped time domain and a signal with an overlapped time domain.
FIG. 4 is a schematic flowchart of an information sending method according to an embodiment of this application.
FIG. 5 is a schematic flowchart of an information sending method according to another embodiment of this application.
FIG. 6 is a schematic diagram of a radio frame with a pilot according to an embodiment of this application.
FIG. 7 is a schematic flowchart of an information sending method according to still another embodiment of this application.
FIG. 8 is a schematic flowchart of an information receiving method according to an embodiment of this application.
FIG. 9 is a schematic flowchart of an information receiving method according to another embodiment of this application.
FIG. 10 is a schematic flowchart of an information receiving method according to still another embodiment of this application.
FIG. 11 is a schematic flowchart of interaction between a transmit end and a receive end according to an embodiment of this application.
FIG. 12 is a schematic flowchart of interaction between a transmit end and a receive end according to another embodiment of this application.
FIG. 13 is a schematic flowchart of interaction between a transmit end and a receive end according to still another embodiment of this application.
FIG. 14 is a schematic structural diagram of an information sending apparatus according to an embodiment of this application.

FIG. 15 is a schematic structural diagram of an information receiving apparatus according to an embodiment of this application.

FIG. 16 is a schematic flowchart of an information receiving method according to yet another embodiment of this application.

FIG. 17 is a schematic structural diagram of an information receiving apparatus according to another embodiment of this application.

FIG. 18 is a schematic flowchart of an information sending method according to yet another embodiment of this application.

FIG. 19 is a schematic structural diagram of an information sending apparatus according to another embodiment of this application.

FIG. 20 is a schematic structural diagram of a communication device according to an embodiment of this application.

FIG. 21 is a schematic diagram of a hardware structure of a terminal according to an embodiment of this application.

FIG. 22 is a schematic diagram of a hardware structure of a network-side device according to an embodiment of this application.

## DETAILED DESCRIPTION

The technical solutions in the embodiments of this application are clearly and completely described in the following with reference to the accompanying drawings in the embodiments of this application. Apparently, the described embodiments are some rather than all of the embodiments of this application. All other embodiments obtained by a person skilled in the art based on the embodiments of this application without creative efforts shall fall within the protection scope of this application.

The specification and claims of this application, and terms "first" and "second" are used to distinguish similar objects, but are not used to describe a specific sequence or order. It should be understood that the data termed in such a way are interchangeable in appropriate circumstances, so that the embodiments of this application can be implemented in orders other than the order illustrated or described herein. In addition, the objects distinguished by "first" and "second" are usually of a same type, without limiting a quantity of objects, for example, there may be one or more first objects. In addition, "and/or" in the description and the claims means at least one of the connected objects, and the character "/" in this specification generally indicates an "or" relationship between the associated objects.

It should be noted that the technologies described in the embodiments of this application are not limited to a Long Term Evolution (Long Term Evolution, LTE)/LTE-Advanced (LTE-Advanced, LTE-A) system, and can be further used in other wireless communication systems, such as code division multiple address (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably, and the described technologies can be used not only for the above-mentioned systems and radio technologies, but also for other systems and radio technologies. However, the following description describes a New Radio (New Radio, NR) system for exemplary purposes, and uses NR terms in most of the following descriptions, although these technologies are also applicable to applications other than the NR system application, such as a 6th generation (6th Generation, 6G) communication system.

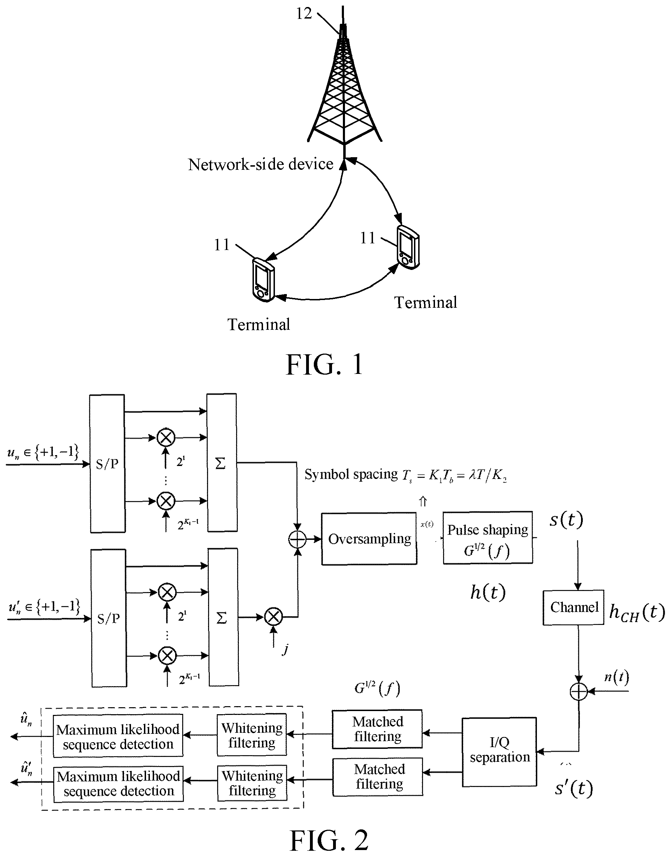

FIG. 1 is a block diagram of a wireless communication system to which an embodiment of this application is applicable. The wireless communication system includes a terminal 11 and a network-side device 12. The terminal 11 may also be referred to as a terminal device or a user terminal (User Equipment, UE). The terminal 11 may be a mobile phone, a tablet computer (Tablet Personal Computer), a laptop computer (Laptop Computer) or referred to as a notebook computer, a personal digital assistant (Personal Digital Assistant, PDA), a palmtop computer, an netbook, an ultra-mobile personal computer (ultra-mobile personal computer, UMPC), a mobile Internet device (Mobile Internet Device, MID), a wearable device (Wearable Device), or vehicular user equipment (VLTE), pedestrian user equipment (PUE), and other terminal-side devices. The wearable device includes bands, headsets, glasses, or the like. It should be noted that, a specific type of the terminal 11 is not limited in this embodiment of this application. The network-side device 12 may be a base station or a core network. The base station may be referred to as a Node B, an evolved Node B, an access point, a base transceiver station (Base Transceiver Station, BTS), a radio base station, a radio transceiver, a basic service set (Basic Service Set, BSS), an extended service set (Extended Service Set, ESS), a node B, an evolved node B (eNB), a home node B, a home evolved node B, a WLAN access point, a Wi-Fi node, a transmitting/receiving point (Transmitting Receiving Point, TRP), or some other suitable term in the field, provided that a same technical effect is achieved. The base station is not limited to a specific technical term. It should be noted that, in this embodiment of this application, only a base station in an NR system is used as an example, but the specific type of the base station is not limited.

OVXDM/FTN is a signal processing method that artificially introduces an appropriate amount of ISI and/or ICI by preprocessing a transmitted signal (also referred to as waveform encoding), and the purpose is to speed up a symbol transmission rate, that is, increase a quantity of symbols transmitted per second per Hertz (Hz*s). The full name of FTN is Faster-than-Nyquist, that is, a faster then Nyquist technology. OVXDM includes overlapped time division multiplexing (OVTDM), overlapped frequency division multiplexing (OVFDM), and overlapped code division multiplexing (OVCDM), as well as a combination of OVTDM and OVFDM with the full name being Overlapped X-Domain Multiplexing, that is, overlapped X-domain multiplexing. In addition, the introduced ISI and ICI increases the complexity of decoding, which may increase a bit error rate. However, the negative effect caused by the increase of the bit error rate can be suppressed by an advanced decoding algorithm, and the channel capacity can still be improved by the method of speeding up the symbol transmission rate.

The expression of the transmitted signal s(t) after waveform encoding may be as follows:

$$s(t) = x(t) * h(t) = \sum_{n}^{N} \sum_{k}^{K} a_{k,n} h(t - kT_{\Delta}) e^{j2\pi tnf_{\Delta}}$$

where x(t) is a transmitted signal before waveform encoding, h(t) is a waveform encoding function, N is a related parameter of an overlapped frequency domain, K is a related parameter of an overlapped time domain, and $T_{\Delta} = \tau T$, $\tau \in (0,1)$, where T is a waveform sending period, and $\tau$ is an overlapped time domain coefficient. Specifically, in OVXDM, $\tau = \frac{1}{K}$. Therefore, $T_{\Delta} = \frac{T}{K}$. $f_{\Delta} = \frac{\zeta}{T}, \zeta \in (0,1)$, where $\zeta$ is an overlapped frequency domain coefficient. Specifically, in OVXDM, $\zeta = \frac{1}{N}$. Therefore, $f_{\Delta} = \frac{1}{NT}$.

In the OVTDM technology, there is a serial cascaded OVTDM implementation solution, as shown in FIG. 2. In the serial cascaded OVTDM, an overlapped time domain is implemented in two stages, the first stage is a pure OVTDM without mutual shift, which is referred to as P-OVTDM (Pure-OVTDM), and the second stage is a shifted OVTDM, which is referred to as S-OVTDM (Shifted-OVTDM). A related parameter of the overlapped time domain in the first stage is $K_1$, and a related parameter of the overlapped time domain in the second stage is $K_2$, that is, K in the formula. A special form of P-OVTDM is conventional modulation technologies such as x-phase shift keying (xPSK) and x-quadrature amplitude modulation (xQAM) technologies used in NR.

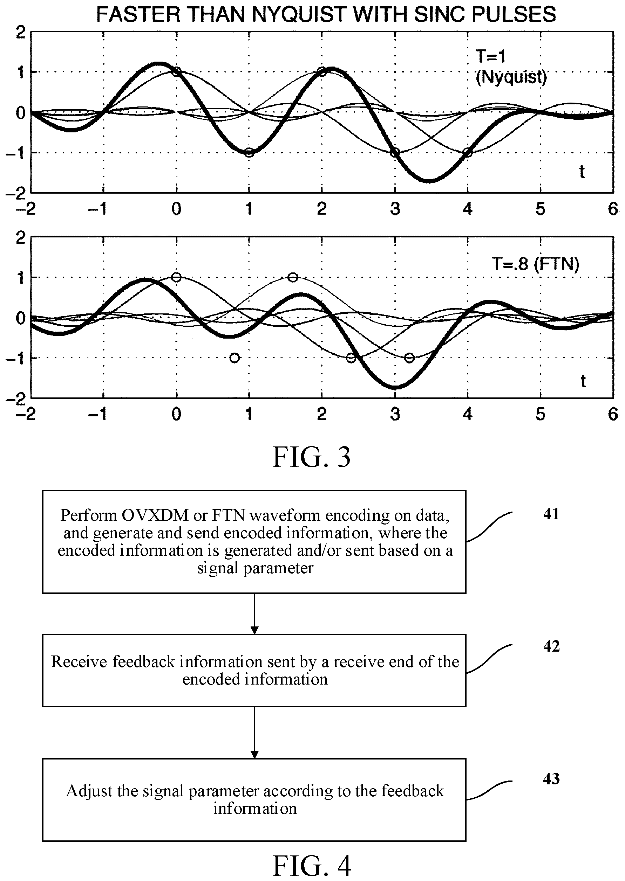

The generation of ISI is described below by taking FIG. 3 as an example. When $T_{\Delta}$ = 0.8, that is, an overlapped time domain waveform coefficient $\tau$ = 0.8, at a moment of each sampling point, an amplitude of a pulse waveform of a waveform encoded signal carrying information about another sampling point is not zero. Therefore, the ISI is generated. In FIG. 3, a horizontal coordinate is time and a vertical coordinate is waveform amplitude.

It is assumed that a multipath channel impulse response function is $h_{CH}(t)$, the signal after passing through the channel may be equivalently represented as:

$$s'(t) = x(t) * h(t) * h_{CH}(t) \triangleq \sum_{\tilde{n}}^{\tilde{N}} \sum_{\tilde{k}}^{\tilde{K}} a_{\tilde{n},\tilde{k}} h(t - T_{\Delta}^{\tilde{k}}) e^{j2\pi t f_{\Delta}^{\tilde{n}}}$$

where $T_{\Delta}^{\tilde{k}} \leq kT_{\Delta}$, $f_{\Delta}^{\tilde{n}} \leq nf_{\Delta}$, $N \leq \tilde{N}, K \leq \tilde{K}$.

Due to an overlapping effect of waveform coding and a multipath channel, a quantity of equivalent multipaths increases, and a symbol spacing and a subcarrier spacing are "closer", resulting in the increase of an overlapping degree of the equivalent time-frequency domain. The increase of the overlapping degree of the time-frequency domain is reflected as more serious ISI and ICI at a receive end, which poses a challenge to the design of the receiver. The complexity of maximum likelihood (Maximum Likelihood, ML) type receivers with the best theoretical performance increases with a waveform overlapping degree. When {K, N} is relatively large, the hardware cannot be implemented in an actual project. Moreover, fast algorithms with fixed decoding complexity cannot do much for signals with a relatively high overlapping degree.

That is, ISI/ICI generated by a radio signal through a complex channel is superimposed with ISI/ICI introduced by a transmitter through waveform coding, resulting in equivalent and more serious ISI/ICI. The receiver is limited by hardware conditions, and the implemented complexity of the decoding algorithm is limited. When the overlapping degree exceeds a certain threshold, the required decoding complexity greatly increases, exceeding the ability of the decoding algorithm, resulting in inability to decode.

An information sending method, an information receiving method, and a communication device provided in the embodiments of this application are described in detail below with reference to the accompanying drawings by using specific embodiments and application scenarios thereof.

First, it should be noted that, the communication device involved in the embodiments of this application may be a network-side device or may be a terminal device. For example, a transmit end is a network-side device and a receive end is a terminal device, or both the transmit end and the receive end are the terminal devices.

Referring to FIG. 4, this embodiment of this application provides an information sending method, applicable to a communication device, and including the following steps.

Step 41. Perform OVXDM or FTN waveform encoding on data, and generate and send encoded information, where the encoded information is generated and/or sent based on a signal parameter.

Step 42. Receive feedback information sent by a receive end of the encoded information.

Step 43. Adjust the signal parameter according to the feedback information.

In this embodiment of this application, a transmit end of encoded information may dynamically adjust a signal parameter related to generation and/or sending of the encoded information according to feedback information from a receive end, to control decoding complexity of the receive end, thereby ensuring that decoding is performed accurately and efficiently.

In this embodiment of this application, optionally, the signal parameter includes at least one of the following:

(1) an overlapped time domain coefficient $\tau$;
(2) a symbol modulation order (Modulation Order) corresponding to $\tau$;
(3) $K_1$ defined by OVXDM;
(4) K defined by OVXDM or $K_2$ defined by cascaded OVXDM;
(5) a symbol modulation order corresponding to $K$ or $K_2$;
(6) an overlapped frequency domain coefficient $\zeta$;
(7) N defined by OVXDM;
(8) a symbol modulation order corresponding to $N$;
(9) a bit rate at which the encoded information is sent; and
(10) a parameter of a filter, for example, a roll-off factor $\alpha$, a quantity of time domain sampling points of the filter, and/or a main lobe width parameter.

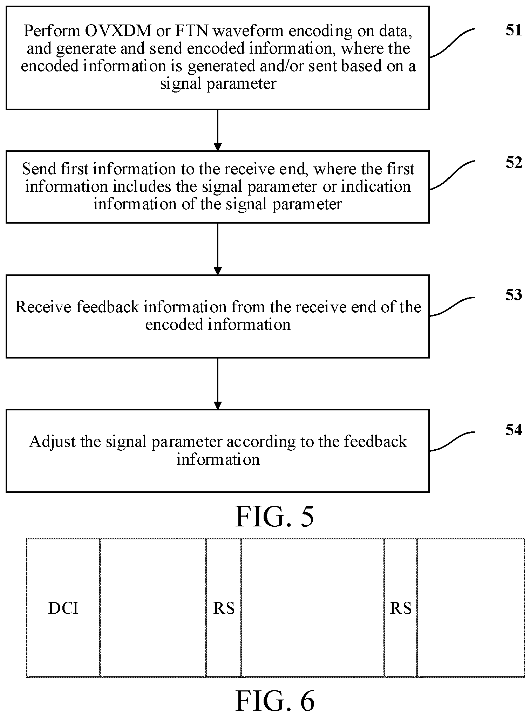

Referring to FIG. 5, this embodiment of this application further provides an information sending method, applicable to a communication device, and including the following steps.

Step 51. Perform OVXDM or FTN waveform encoding on data, and generate and send encoded information, where the encoded information is generated and/or sent based on a signal parameter.

Step 52. Send first information to the receive end, where the first information includes the signal parameter or indication information of the signal parameter.

Step 53. Receive feedback information sent by a receive end of the encoded information.

Step 54. Adjust the signal parameter according to the feedback information.

In this embodiment of this application, the transmit end actively sends the signal parameter or indication information of the signal parameter to the receive end, so that the receive end may select an appropriate decoding algorithm according to the signal parameter used by the transmit end. In addition, the transmit end may dynamically adjust the signal parameter related to generation and/or sending of the encoded information according to feedback information from the receive end, to control the decoding complexity of the receive end, thereby ensuring that the decoding is accurately and efficiently performed.

In this embodiment of this application, optionally, if the communication device (the transmit end) is a network-side device, the first information is sent in one of the following manners:

(1) indicated by a physical downlink control channel (Physical Downlink Control Channel, PDCCH).

For example, the first information is explicitly indicated in downlink control information (Downlink Control Information, DCI), or the first information is implicitly indicated in a PDDCH scrambling manner.

(2) indicated by a dedicated-radio resource control (Dedicated-RRC) message in a physical downlink shared channel (Physical Downlink Shared Channel, PDSCH).

(3) indicated by a broadcast message,
where the broadcast message may include: a master information block (master information block, MIB) in a physical broadcast channel (Physical Broadcast Channel, PBCH), a physical broadcast channel demodulation reference signal (PBCH-DMRS), PBCH scrambling, and a system information block (System Information Block, SIB) in the PDSCH.

For example, the first information is explicitly indicated in the MIB in the PBCH, or the first information is implicitly indicated in the PBCH-DMRS, or the first information is implicitly indicated in the form of PBCH scrambling, or the first information is indicated in the SIB message in the PDSCH.

(4) indicated by the broadcast message and the Dedicated-RRC message.

(5) indicated by the broadcast message and DCI.

Optionally, the sending first information to the receive end includes: sending a signal parameter and index value correspondence table by using the broadcast message; and sending an index value of the signal parameter corresponding to the encoded information by using the Dedicated-RRC message or the DCI.

In this embodiment, a signal parameter and index value correspondence table may be pre-configured for the receive end by using the broadcast message, and then an index value of a signal parameter corresponding to currently sent encoded information is indicated by the Dedicated-RRC message or the DCI, so that the receive end may search the signal parameter and index value correspondence table according to the received index value, and determine the signal parameter used by the transmit end.

In this embodiment of this application, optionally, if the communication device (the transmit end) is a terminal, the first information is sent in one of the following manners:

(1) indicated by a physical sidelink control channel (Physical Sidelink Control Channel, PSCCH);
(2) indicated by a physical sidelink shared channel (Physical Sidelink Shared Channel, PSSCH); and
(3) indicated by a broadcast message.

The broadcast message may be a physical broadcast shared channel (PBSCH).

In some embodiments of this application, in the foregoing embodiments, the feedback information sent by the receive end is second information, where the second information is one of the following:

(1) first-type second information, where the first-type second information includes at least one of the following: a bit error rate and a channel measurement parameter, where the channel measurement parameter is a parameter affecting equivalent ISI and/or equivalent ICI in a channel;

the bit error rate is a bit error rate obtained by the receive end decoding the encoded information; and
the channel measurement parameter is a parameter obtained by the receive end measuring a channel.

Optionally, the channel measurement parameter includes at least one of the following: a signal to interference plus noise ratio (Signal to Interference plus Noise Ratio, SINR), a multipath quantity, a residual frequency offset (which refers to a frequency offset after frequency offset correction), a Doppler frequency shift, and a relative speed, and the impact of the channel measurement parameters may also be indirectly reflected in the bit error rate.

In this embodiment of this application, if the first-type second information includes the channel measurement parameter, optionally, before the receiving feedback information sent by a receive end of the encoded information, the method further includes: sending a pilot signal, so that the receive end may measure a channel according to the pilot signal, to obtain the channel measurement parameter.

Referring to FIG. 6, in this embodiment of this application, a pilot (for example, an RS in FIG. 6) may be inserted into a radio frame sent by the transmit end, and to accurately reflect a channel condition, waveform encoding does not need to be performed on the pilot. Therefore, the pilot signal may include at least one of the following: a synchronization signal, a channel state information-reference signal, or a preset reference signal.

(2) second-type second information, where the second-type second information includes: a suggested signal parameter or indication information of a suggested signal parameter.

In some embodiments of this application, optionally, the indication information of the suggested signal parameter is an index value of a signal parameter; and The step of adjusting the signal parameter according to the feedback information in the foregoing embodiment includes: searching a signal parameter and index value correspondence table according to a received index value of the suggested signal parameter, and determining a signal parameter corresponding to the received index value; and adjusting a current signal parameter according to the signal parameter corresponding to the received index value.

Optionally, the signal parameter and index value correspondence table is agreed on in a protocol or is configured by the communication device.

Optionally, the index value may be an overlapped coefficient such as an overlapped time domain coefficient or an overlapped frequency domain coefficient.

In some other embodiments of this application, optionally, the indication information of the signal parameter is indication information used for indicating increasing or decreasing of a signal parameter; and the step of adjusting the signal parameter according to the feedback information in the foregoing embodiment includes: increasing or decreasing a current signal parameter according to a preset stepping according to the indication information of the suggested signal parameter.

Optionally, the preset stepping is agreed on in a protocol or is configured by the communication device.

In this embodiment of this application, optionally, if the communication device is a network-side device, the second information is received in at least one of the following manners:

    a physical uplink shared channel (Physical Uplink Shared Channel, PUSCH);
    a physical uplink control channel (Physical Uplink Control Channel, PUCCH); and
    a physical uplink feedback channel (Physical Uplink Feedback Channel, PUFCH).

For example, when the second information is the indication information of the suggested signal parameter, the second information may be indicated in a scheduling request (scheduling request, SR) by using relatively few bits.

If the PUFCH is defined, the second information may also be sent in the PUFCH.

When the second information is a series of channel measurement parameters, the second information may be indicated in the form of a media access control control element (MAC CE) in a buffer state report (buffer state report, BSR) or may be sent in the form of data in the PUSCH.

If the communication device is a terminal, the second information is received in at least one of the following manners:

    a PSSCH;
    a PSCCH; and
    a physical sidelink feedback channel (Physical Sidelink Feedback Channel, PSFCH).

In some embodiments of this application, the feedback information sent by the receive end is feedback information used for feeding back whether the encoded information is successfully parsed, and the feedback information is, for example, negative acknowledgement (NACK).

Optionally, the feedback information is the feedback information used for feeding back whether the encoded information is successfully parsed, and the feedback information includes a negative acknowledgement NACK message indicating that the encoded information is not successfully parsed; and the step of adjusting the signal parameter according to the feedback information in the foregoing embodiment includes: adjusting the signal parameter if a proportion or a quantity of NACK messages within a preset time period or within a preset quantity of subframes or slots is greater than a preset threshold.

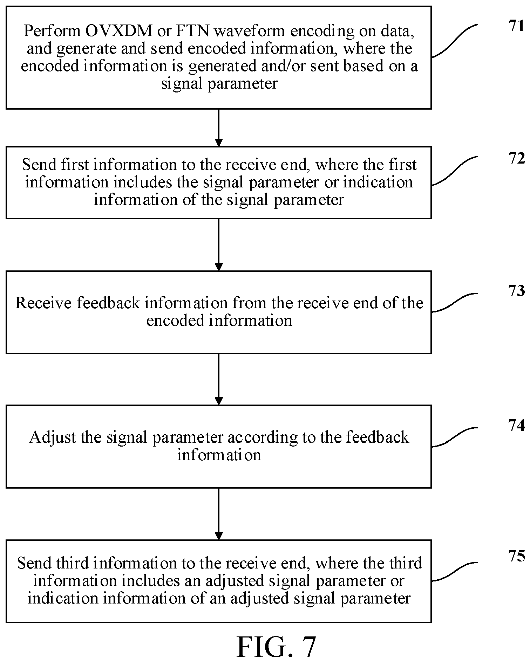

Referring to FIG. 7, this embodiment of this application further provides an information sending method, applicable to a communication device, and including the following steps.

Step 71. Perform OVXDM or FTN waveform encoding on data, and generate and send encoded information, where the encoded information is generated and/or sent based on a signal parameter.

Step 72. Send first information to the receive end, where the first information includes the signal parameter or indication information of the signal parameter.

In some embodiments of this application, step 72 may alternatively be not included.

Step 73. Receive feedback information sent by a receive end of the encoded information.

Step 74. Adjust the signal parameter according to the feedback information.

Step 75. Send third information to the receive end, where the third information includes an adjusted signal parameter or indication information of an adjusted signal parameter.

In this embodiment of this application, the transmit end actively sends the signal parameter or indication information of the signal parameter to the receive end, so that the receive end may select an appropriate decoding algorithm according to the signal parameter used by the transmit end. In addition, the transmit end may dynamically adjust the signal parameter related to generation and/or sending of the encoded information according to feedback information from the receive end, and indicate an adjusted signal parameter to the receive end, to control the decoding complexity of the receive end, thereby ensuring that the decoding is accurately and efficiently performed.

Optionally, if the communication device is a network-side device, the third information is sent in one of the following manners:

    (1) indicated by a PDCCH.

For example, the third information is explicitly indicated in DCI, or the third information is implicitly indicated in a manner of PDCCH scrambling.

(2) indicated by a Dedicated-RRC message in a PDSCH.

(3) indicated by a broadcast message,

where the broadcast message may include: an MIB in a PBCH, a PBCH-DMRS, PBCH scrambling, or a SIB message in the PDSCH.

(4) indicated by the broadcast message and the Dedicated-RRC message.

(5) indicated by the broadcast message and DCI.

Optionally, the signal parameter and index value correspondence table is defined by a protocol. A signal parameter and index value correspondence table used by a current cell is notified to a UE by using the broadcast message, and an index value of a currently used signal parameter is indicated by the RRC message or the DCI, so that the UE obtains a group of specific signal parameters. Different cells may use different correspondence tables, and a correspondence table used by the same cell may be dynamically changed, which is indicated by the broadcast message.

Optionally, if the communication device is a terminal, the third information is sent in one of the following manners:

indicated by a PSCCH;

indicated in a PSSCH; and

indicated by a broadcast message.

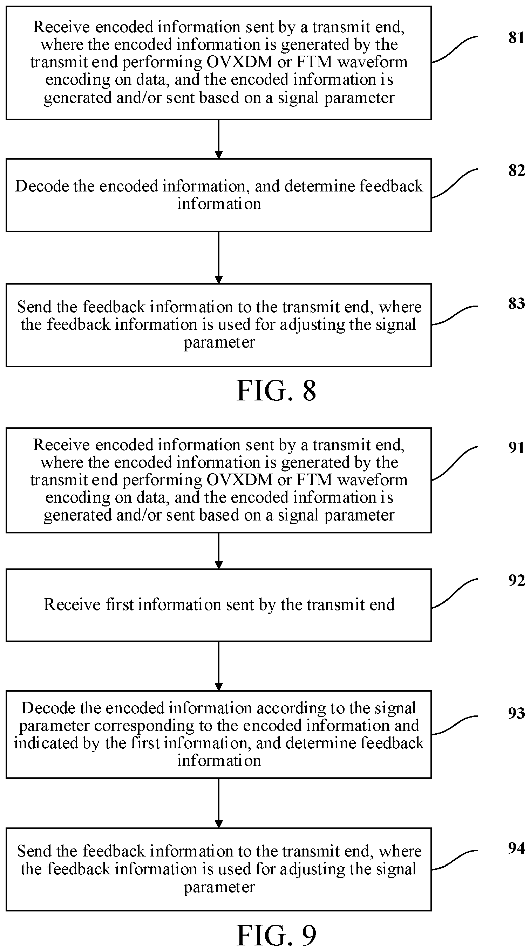

Referring to FIG. 8, this embodiment of this application further provides an information receiving method, applicable to a communication device, and including the following steps.

Step 81. Receive encoded information sent by a transmit end, where the encoded information is generated by the transmit end performing OVXDM or FTN waveform encoding on data, and the encoded information is generated and/or sent based on a signal parameter.

Step 82. Decode the encoded information, and determine feedback information.

Step 83. Send the feedback information to the transmit end, where the feedback information is used for adjusting the signal parameter.

In this embodiment of this application, a receive end of encoded information may send feedback information to a transmit end, so that the transmit end may dynamically adjust a signal parameter related to generation and/or sending of the encoded information according to the feedback information, to control decoding complexity of the receive end, thereby ensuring that decoding is performed accurately and efficiently.

In this embodiment of this application, optionally, the signal parameter includes at least one of the following:

(1) an overlapped time domain coefficient $\tau$;

(2) a symbol modulation order corresponding to $\tau$;

(3) $K_1$ defined by OVXDM;

(4) K defined by OVXDM or $K_2$ defined by cascaded OVXDM;

(5) a symbol modulation order corresponding to $K$ or $K_2$;

(6) an overlapped frequency domain coefficient $\zeta$;

(7) N defined by OVXDM;

(8) a symbol modulation order corresponding to $N$;

(9) a bit rate at which the encoded information is sent; and

(10) a parameter of a filter.

Referring to FIG. 9, this embodiment of this application further provides an information receiving method, applicable to a communication device, and including the following steps.

Step 91. Receive encoded information sent by a transmit end, where the encoded information is generated by the transmit end performing OVXDM or FTN waveform encoding on data, and the encoded information is generated and/or sent based on a signal parameter.

Step 92. Receive first information sent by the transmit end, where the first information includes the signal parameter corresponding to the encoded information or indication information of the signal parameter.

Step 93. Decode the encoded information according to the signal parameter corresponding to the encoded information and indicated by the first information and determine feedback information.

Step 94. Send the feedback information to the transmit end, where the feedback information is used for the transmit end to adjust the signal parameter.

In this embodiment of this application, a receive end of encoded information may select an appropriate decoding algorithm according to a signal parameter indicated by a transmit end and may send feedback information to the transmit end, so that the transmit end may dynamically adjust a signal parameter related to generation and/or sending of the encoded information according to the feedback information, to control decoding complexity of the receive end, thereby ensuring that decoding is performed accurately and efficiently.

In this embodiment of this application, optionally, if the communication device is a terminal in an uplink and a downlink, the first information is received in at least one of the following manners:

through a PDCCH;
indicated by a Dedicated-RRC message in a PDSCH;
indicated by a broadcast message;
indicated by the broadcast message and the Dedicated-RRC message; and
indicated by the broadcast message and DCI; and

Optionally, the receiving first information sent by the transmit end includes: receiving, by using the broadcast message, a signal parameter and index value correspondence table sent by the transmit end; and receiving, by using the Dedicated-RRC message or the DCI, an index value of the signal parameter corresponding to the encoded information sent by the transmit end.

If the communication device is a terminal in a sidelink, the first information is received in one of the following manners:

indicated by a PSCCH;
indicated in a PSSCH; and
indicated by a broadcast message.

In some embodiments of this application, in the foregoing embodiments, the feedback information sent by the receive end is second information, where the second information is one of the following:

(1) first-type second information, where the first-type second information includes at least one of the following: a bit error rate and a channel measurement parameter, where the channel measurement parameter is a parameter affecting equivalent ISI and/or equivalent ICI in a channel;

Optionally, the channel measurement parameter includes at least one of the following: a signal to interference plus noise ratio, a multipath quantity, a residual frequency offset, a Doppler frequency shift, and a relative speed.

In this embodiment of this application, if the first-type second information includes the channel measurement parameter, optionally, before the sending the feedback information to the transmit end, the method further includes: receiving a pilot signal sent by the transmit end; and measuring a channel according to the pilot signal, to obtain the channel measurement parameter. The pilot signal includes at least one of the following: a synchronization signal, a channel state information-reference signal, or a preset reference signal.

(2) second-type second information, where the second-type second information includes: a suggested signal parameter or indication information of a suggested signal parameter.

In this embodiment of this application, optionally, when the second information is the second-type second information, before the sending the feedback information to the transmit end, the method further includes: obtaining reference information, where the reference information includes at least one of the following: the channel measurement parameter, the bit error rate, and a capability of the communication device; and determining the suggested signal parameter according to the reference information.

Optionally, the indication information of the suggested signal parameter is an index value of a signal parameter or indication information used for indicating increasing or decreasing of a signal parameter. For example, the indication information of the suggested signal parameter may be a 1-bit flag, increasing/decreasing of an overlapped time/frequency domain coefficient is indicated by 0/1, and an increased/decreased stepping may be predefined by a protocol.

If the communication device is a terminal in an uplink and a downlink, the second information is sent in at least one of the following manners:

a PUSCH;
a PUCCH; and
a PLTFCH; and
if the communication device is a terminal in a sidelink, the second information is sent in at least one of the following manners:

a PSSCH;
a PSCCH; and
a PSFCH.

In some embodiments of this application, the feedback information sent by the receive end is feedback information used for feeding back whether the encoded information is successfully parsed, and the feedback information is, for example, negative acknowledgement (NACK).

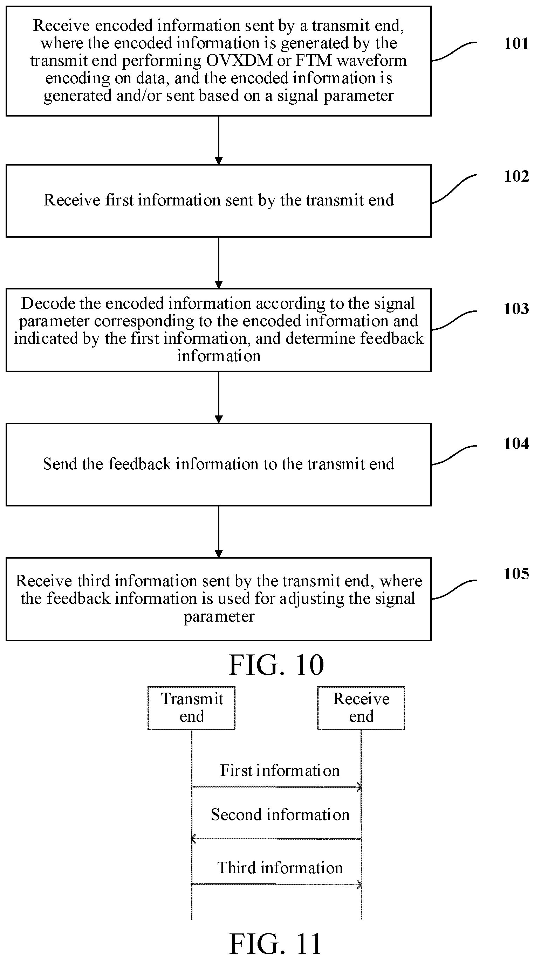

Referring to FIG. 10, this embodiment of this application further provides an information receiving method, applicable to a communication device, and including the following steps.

Step 101. Receive encoded information sent by a transmit end, where the encoded information is generated by the transmit end performing OVXDM or FTN waveform encoding on data, and the encoded information is generated and/or sent based on a signal parameter.

Step 102. Receive first information sent by the transmit end, where the first information includes the signal parameter corresponding to the encoded information or indication information of the signal parameter.

In some embodiments of this application, step 102 may alternatively be not included.

Step 103. Decode the encoded information according to the signal parameter corresponding to the encoded information and indicated by the first information and determine feedback information.

Step 104. Send the feedback information to the transmit end, where the feedback information is used for the transmit end to adjust the signal parameter.

Step 105. Receive third information sent by the transmit end, where the third information includes an adjusted signal parameter or indication information of an adjusted signal parameter.

In this embodiment of this application, a receive end may select an appropriate decoding algorithm according to a signal parameter indicated by a transmit end and may simultaneously send feedback information to the transmit end, so that the transmit end may dynamically adjust a signal parameter related to generation and/or sending of encoded information according to the feedback information, to control decoding complexity of the receive end, thereby ensuring that decoding is performed accurately and efficiently.

Optionally, if the communication device is a terminal in an uplink and a downlink, the third information is sent in at least one of the following manners:

indicated by a PDCCH;
indicated by a Dedicated-RRC message in a PDSCH;
indicated by a broadcast message;
indicated by the broadcast message and the Dedicated-RRC message; and
indicated by the broadcast message and DCI; and

If the communication device is a terminal in a sidelink, the third information is sent in one of the following manners:

indicated by a PSCCH;
indicated in a PSSCH; and
indicated by a broadcast message.

The following describes the information sending method and the information receiving method in this application by using examples.

Manner 1-1: A transmit end sends first information to a receive end, where the first information includes a signal parameter. The receive end feeds back second information to the transmit end, where the second information includes a bit error rate. The transmit end adjusts the signal parameter according to the bit error rate and sends third information to the receive end, where the third information includes an adjusted signal parameter.

Manner 1-2: A transmit end sends first information to a receive end, where the first information includes a signal parameter. The receive end feeds back second information to the transmit end, where the second information includes a channel measurement parameter. The transmit end adjusts the signal parameter according to the channel measurement parameter and sends third information to the receive end, where the third information includes an adjusted signal parameter. The channel measurement parameter includes at least one of the following: a signal to interference plus noise ratio, a multipath quantity, a residual frequency offset, a Doppler frequency shift, and a relative speed.

Manner 1-3: A transmit end sends first information to a receive end, where the first information includes a signal parameter. The receive end feeds back second information to the transmit end according to a channel measurement parameter and a capability of a user, where the second information includes indication information of a suggested signal parameter. The transmit end searches a signal parameter and index value correspondence table according to an index value in the indication information of the suggested signal parameter, and determines a signal parameter corresponding to the received index value; and adjusts the signal parameter according to the signal parameter corresponding to the receive index value and sends third information to the receive end, where the third information includes an adjusted signal parameter. The signal parameter and index value correspondence table is predefined in a protocol. The index value may be an overlapped coefficient.

Manner 2-1: A transmit end sends first information to a receive end, where the first information includes a signal parameter. The receive end determines whether the signal parameter is appropriate according to a channel measurement parameter, and feeds back second information to the transmit end based on a determining result, where the second information includes indication information (for example, 1-bit used for indicating increasing or decreasing of a signal parameter) of a suggested signal parameter. The transmit end adjusts the signal parameter according to the indication information of the suggested signal parameter and sends third information to the receive end, where the third information includes an adjusted signal parameter. For example, the indication information of the suggested signal parameter may be a 1-bit flag, increasing/decreasing of an overlapped time/frequency domain coefficient is indicated by 0/1, and an increased/decreased stepping may be predefined in a protocol.

Manner 2-2: A transmit end sends first information to a receive end, where the first information includes a signal parameter. The receive end provides a suggested signal parameter according to a channel measurement parameter and sends the suggested signal parameter to the transmit end. The transmit end adjusts the signal parameter according to the received suggested signal parameter and sends third information to the receive end, where the third information includes an adjusted signal parameter. The channel measurement parameter includes at least one of the following: a signal to interference plus noise ratio, a multipath quantity, a residual frequency offset, a Doppler frequency shift, and a relative speed.

Although information content sent in the foregoing manners is different, interaction is performed by using the first information, the second information, and the third information, and a basic common process is shown in FIG. 11

The following describes the information sending method and the information receiving method in this application with reference specific application scenarios.

Embodiment 1 of this application

In this embodiment, a network-side device sends first information to a terminal device, where the first information may be sent in a PDCCH (for example, the first information is explicitly indicated in DCI, or the first information is implicitly indicated in a manner of PDCCH scrambling). The terminal device always uses the first information carried in the DCI that is successfully parsed last time.

Second information may be sent by using one or more of a PUSCH, a PUCCH, and a PUFCH.

For example, when the second information is the indication information of the suggested signal parameter, the second information may be indicated in a scheduling request (scheduling request, SR) by using relatively few bits.

When the second information is a series of signal measurement parameters, the second information may be indicated in the form of a media access control control element (MAC CE) in a buffer state report (buffer state report, BSR) or may be sent in the form of data in the PUSCH.

If the PUFCH is defined, the second information may also be sent in the PUFCH.

Third information may be indicated in a PDCCH (for example, the third information is explicitly indicated in DCI, or the third information is implicitly indicated in a manner of PDCCH scrambling).

Implementation 2 of this application

In this embodiment, a network-side device sends first information to a terminal device, where the first information may be sent in the form of a broadcast message (for example, the first information is explicitly indicated in an MIB in a PBCH, or the first information is implicitly indicated in a PBCH-DMRS, or the first information is implicitly indicated in the form of PBCH scrambling, or the first information is indicated in a SIB message in a PDSCH).

Second information may be sent by using one or more of a PUSCH, a PUCCH, and a PUFCH.

For example, when the second information is the indication information of the suggested signal parameter, the second information may be indicated in a scheduling request (scheduling request, SR) by using relatively few bits.

When the second information is a series of signal measurement parameters, the second information may be indicated in the form of a media access control control element (MAC CE) in a buffer state report (buffer state report, BSR) or may be sent in the form of data in the PUSCH.

If the PUFCH is defined, the second information may also be sent in the PUFCH.

Third information is indicated by a Dedicated-RRC message in a PDSCH, and a signal parameter indicated in the broadcast message is refreshed.

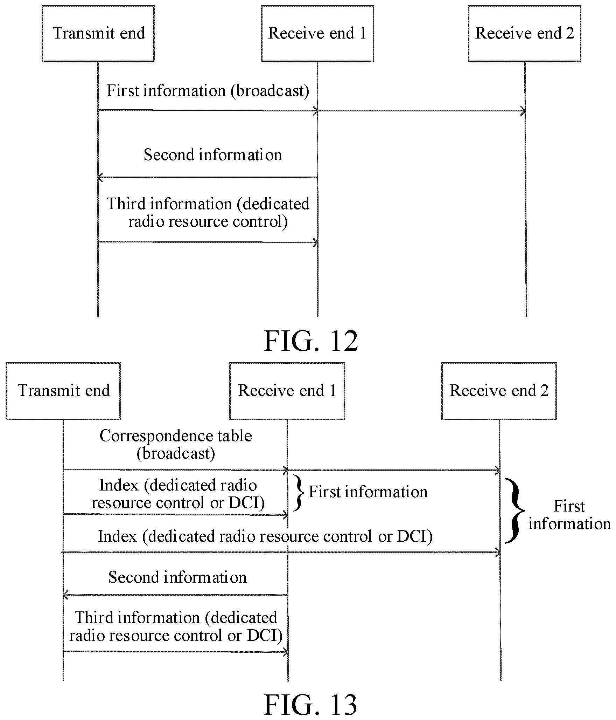

As shown in FIG. 12, the advantage of Embodiment 2 compared with Embodiment 1 is that a current signal parameter may be notified to all UEs within coverage by using a broadcast message, and if a UE finds that the signal parameter is not suitable, the UE feeds back the signal parameter to the transmit end separately, and the transmit end may separately adjust the signal parameter for the LTE and perform a notification by using dedicated-RRC, which avoids setting aside a fixed field in the PDCCH and saves overheads.

Implementation 3 of this application

In this embodiment, first information may be indicated in the form of a combination of a broadcast message+Dedicated RRC or a combination of a broadcast message+DCI. The broadcast message may include: an MIB in a PBCH, a PBCH-DMRS, PBCH scrambling, or a SIB message in the PDSCH. Optionally, the signal parameter and index value correspondence table is defined by a protocol. A signal parameter and index value correspondence table used by a current cell is notified to a LTE by using the broadcast message, and an index value is indicated by the RRC message or the DCI, so that the UE obtains a group of specific signal parameters. Different cells may use different correspondence tables, and a correspondence table used by the same cell may be dynamically changed, which is indicated by the broadcast message.

Second information may be sent by using one or more of a PUSCH, a PUCCH, and a PUFCH.

For example, when the second information is the indication information of the suggested signal parameter, the second information may be indicated in a scheduling request (scheduling request, SR) by using relatively few bits.

When the second information is a series of signal measurement parameters, the second information may be indicated in the form of a media access control control element (MAC CE) in a buffer state report (buffer state report, BSR) or may be sent in the form of data in the PUSCH.

If the PUFCH is defined, the second information may also be sent in the PUFCH.

Third information may indicate the index value by using a Dedicated-RRC message in a PDSCH, and a signal parameter indicated in the first information is refreshed.

As shown in FIG. 13, the advantage of Embodiment 3 compared with Embodiment 2 is that the transmit end may notify all UEs within coverage of a current signal parameter and index value correspondence table by using a broadcast message and simultaneously configure the UEs by using dedicated messages, which saves overheads and provides considerable flexibility. In addition, the LTE may directly indicate an index value of a suggested signal parameter by feeding back few bits, which provides a certain degree of autonomy and saves feedback overheads.

Embodiment 4 of this application (which is equivalent to open loop link adaptation (OLLA))

In this embodiment, first information may be sent in the form of Embodiment 1 and Embodiment 2.

Second information does not need to be sent. A transmit end counts an ACK message indicating that a receive end successfully parses encoded information, and if a proportion or a quantity of NACK messages within a preset time period or within a preset quantity of subframes or slots is greater than a preset threshold, the transmit end adjusts a signal parameter.

Third information may be indicated in a PDCCH (for example, the third information is explicitly indicated in DCI, or the third information is implicitly indicated in a manner of PDCCH scrambling).

Embodiment 5 of this application

In this embodiment, a network-side device first generates a corresponding pilot signal according to a default signal parameter setting stipulated in a protocol without sending first information, for example, a transmit end sends a pilot signal of which an overlapping quantity is 1.

A UE sends second information to the network-side device according to a channel measurement result (for example, a measurement result for the pilot signal), where the second information includes a suggested signal parameter.

The network-side device sends third information, where the third information includes an adjusted signal parameter, and the third information may be indicated in a PDCCH (for example, the third information is explicitly indicated in DCI, or the third information is implicitly indicated in a manner of PDCCH scrambling).

There is no first information in this embodiment.

The foregoing embodiments are not only applicable to the communication between the network device and the terminal device, but also to the communication between the terminal devices. During application between the terminals, a PDSCH/PUSCH may be changed to a PSSCH, a PDCCH/PUCCH may be changed to a PSCCH, a PBCH may be changed to a physical broadcast shared channel (PBSCH), and a PUFCH may be changed to a PSFCH.

In the embodiments of this application, a signal parameter of a transmit end is dynamically adjusted by designing a measurement-feedback-adjustment interaction mechanism between the transmit end and a receive end. It resolves the problem that a receiver cannot perform decoding correctly under an extreme condition when an equivalent overlapped time/frequency coefficient caused by waveform encoding and a multipath channel at the transmit end is too large. In addition, through the mechanism, the decoding complexity at the receiver side can be artificially controlled through the coordination between the transmit end and the receive end, thereby providing another way to implement the power control of the terminal.

It should be noted that, the information sending method provided in the embodiments of this application may be performed by an information sending apparatus or a control module configured to perform the information sending method in the information sending apparatus. In this embodiment of this application, the information sending apparatus provided in the embodiments of this application is described by using an example in which the information sending apparatus performs the information sending method.

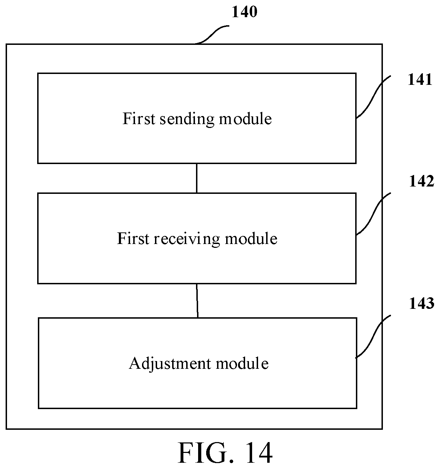

Referring to FIG. 14, this embodiment of this application provides an information sending apparatus 140, including:

a first sending module 141, configured to perform OVXDM or FTN waveform encoding on data, and generate and send encoded information, where the encoded information is generated and/or sent based on a signal parameter;
a first receiving module 142, configured to receive feedback information sent by a receive end of the encoded information; and
an adjustment module 143, configured to adjust the signal parameter according to the feedback information.

Optionally, the signal parameter includes at least one of the following:

an overlapped time domain coefficient $\tau$;
a symbol modulation order corresponding to $\tau$;
$K_1$ defined by OVXDM;
$K$ defined by OVXDM or $K_2$ defined by cascaded OVXDM;
a symbol modulation order corresponding to $K$ or $K_2$;
an overlapped frequency domain coefficient $\zeta$;
N defined by OVXDM;
a symbol modulation order corresponding to N;
a bit rate at which the encoded information is sent; and
a parameter of a filter.
Optionally, the information sending apparatus 140 further includes:
a second sending module, configured to send first information to the receive end, where the first information includes the signal parameter or indication information of the signal parameter.

Optionally, if the communication device is a network-side device, the first information is sent in one of the following manners:

through a PDCCH;
indicated by a Dedicated-RRC message in a PDSCH;
indicated by a broadcast message;
indicated by the broadcast message and the Dedicated-RRC message; and
indicated by the broadcast message and DCI; and

Optionally, if the communication device is a terminal, the first information is sent in one of the following manners:

indicated by a PSCCH;
indicated in a PSSCH; and
indicated by a broadcast message.

Optionally, the second sending module is configured to send a signal parameter and index value correspondence table by using the broadcast message; and send an index value of the signal parameter corresponding to the encoded information by using the Dedicated-RRC message or the DCI.
Optionally, the feedback information is second information or feedback information used for feeding back whether the encoded information is successfully parsed, where

the second information is one of the following:
first-type second information, where the first-type second information includes at least one of the following: a bit error rate and a channel measurement parameter, where the channel measurement parameter is a parameter affecting equivalent ISI and/or equivalent ICI in a channel; and
second-type second information, where the second-type second information includes: a suggested signal parameter or indication information of a suggested signal parameter.

Optionally, if the communication device is a network-side device, the second information is received in at least one of the following manners:

a PUSCH;
a PUCCH; and
a PLTFCH; and
if the communication device is a terminal, the second information is received in at least one of the following manners:

a PSSCH;
a PSCCH; and
a PSFCH.

Optionally, the channel measurement parameter includes at least one of the following: a signal to interference plus noise ratio, a multipath quantity, a residual frequency offset, a Doppler frequency shift, and a relative speed.

Optionally, the indication information of the suggested signal parameter is an index value of a signal parameter; and the adjustment module is configured to search a signal parameter and index value correspondence table according to a received index value of the suggested signal parameter, and determine a signal parameter corresponding to the received index value; and adjust a current signal parameter according to the signal parameter corresponding to the received index value.

Optionally, the signal parameter and index value correspondence table is agreed on in a protocol or is configured by the communication device.

Optionally, the indication information of the suggested signal parameter is indication information used for indicating increasing or decreasing of a signal parameter; and the adjustment module is configured to increase or decrease a current signal parameter according to a preset stepping according to the indication information of the suggested signal parameter.

Optionally, the feedback information is the feedback information used for feeding back whether the encoded information is successfully parsed, and the feedback information includes a negative acknowledgement NACK message indicating that the encoded information is not successfully parsed; and the adjustment module is configured to adjust the signal parameter if a proportion or a quantity of NACK messages within a preset time period or within a preset quantity of subframes or slots is greater than a preset threshold.

Optionally, the information sending apparatus 140 further includes:
a third sending module, configured to send third information to the receive end, where the third information includes an adjusted signal parameter or indication information of an adjusted signal parameter.

Optionally, if the communication device is a network-side device, the third information is sent in one of the following manners:

indicated by a PDCCH;
indicated by a Dedicated-RRC message in a PDSCH;
indicated by a broadcast message;
indicated by the broadcast message and the Dedicated-RRC message; and
indicated by the broadcast message and DCI; and
if the communication device is a terminal, the third information is sent in one of the following manners:

indicated by a PSCCH;
indicated in a PSSCH; and
indicated by a broadcast message.

Optionally, the information sending apparatus further includes: a fourth sending module, configured to send a pilot signal, where the pilot signal includes at least one of the following: a synchronization signal, a channel state information-reference signal, or a preset reference signal.

The information sending apparatus provided in this embodiment of this application can implement the processes implemented in the method embodiments of FIG. 4 to FIG. 7 and achieves the same technical effects. To avoid repetition, details are not described herein again.

It should be noted that, the information receiving method provided in the embodiments of this application may be performed by an information receiving apparatus or a control module configured to perform the information receiving method in the information receiving apparatus. In this embodiment of this application, the information receiving apparatus provided in the embodiments of this application is described by using an example in which the information receiving apparatus performs the information receiving method.

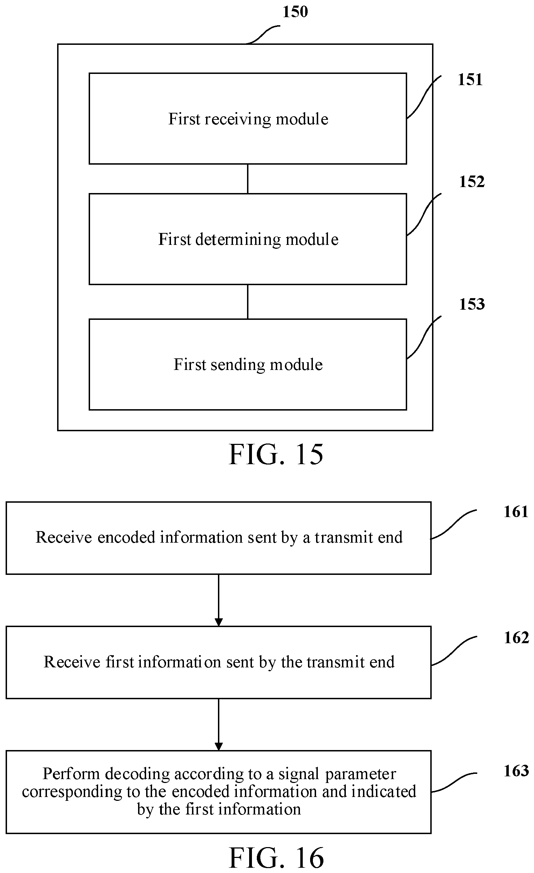

Referring to FIG. 15, this embodiment of this application provides an information receiving apparatus 150, including:

a first receiving module 151, configured to receive encoded information sent by a transmit end, where the encoded information is generated by the transmit end performing OVXDM or FTN waveform encoding on data, and the encoded information is generated and/or sent based on a signal parameter;
a first determining module 152, configured to decode the encoded information, and determine feedback information; and
a first sending module 153, configured to send the feedback information to the transmit end, where the feedback information is used for the transmit end to adjust the signal parameter.

Optionally, the signal parameter includes at least one of the following:

an overlapped time domain coefficient $\tau$;
a symbol modulation order corresponding to $\tau$;
$K_1$ defined by OVXDM;
K defined by OVXDM or $K_2$ defined by cascaded OVXDM;
a symbol modulation order corresponding to $K$ or $K_2$;
an overlapped frequency domain coefficient $\zeta$;
N defined by OVXDM;
a symbol modulation order corresponding to $N$;
a bit rate at which the encoded information is sent; and
a parameter of a filter.

Optionally, the feedback information is second information or feedback information used for feeding back whether the encoded information is successfully parsed, where
the second information is one of the following:

first-type second information, where the first-type second information includes at least one of the following: a bit error rate and a channel measurement parameter, where the channel measurement parameter is a parameter affecting equivalent ISI and/or equivalent ICI in a channel; and
second-type second information, where the second-type second information includes: a suggested signal parameter or indication information of a suggested signal parameter.

Optionally, if the communication device is a terminal in an uplink and a downlink, the second information is sent in at least one of the following manners:

a PUSCH;
a PUCCH; and
a PLTFCH; and
if the communication device is a terminal in a sidelink, the second information is sent in at least one of the following manners:

a PSSCH;
a PSCCH; and
a PSFCH.

Optionally, the channel measurement parameter includes at least one of the following: a signal to interference plus noise ratio, a multipath quantity, a residual frequency offset, a Doppler frequency shift, and a relative speed.
Optionally, the information receiving apparatus 150 further includes:

a second receiving module, configured to receive a pilot signal sent by the transmit end, where the pilot signal includes at least one of the following: a synchronization signal, a channel state information-reference signal, or a preset reference signal; and
a measurement module, configured to measure a channel according to the pilot signal, to obtain the channel measurement parameter.

Optionally, when the second information is the second-type second information, the information receiving apparatus 150 further includes:

a first obtaining module, configured to obtain reference information, where the reference information includes at least one of the following: the channel measurement parameter, the bit error rate, and a capability of the communication device; and

a second determining module, configured to determine the suggested signal parameter according to the reference information.

Optionally, the indication information of the suggested signal parameter is an index value of a signal parameter or indication information used for indicating increasing or decreasing of a signal parameter.

Optionally, the information receiving apparatus 150 further includes:

a third receiving module, configured to receive first information sent by the transmit end, where the first information includes the signal parameter corresponding to the encoded information or indication information of the signal parameter; and

the first determining module, configured to decode the encoded information according to the signal parameter corresponding to the encoded information and indicated by the first information.

Optionally, if the communication device is a terminal in an uplink and a downlink, the first information is received in at least one of the following manners:

through a PDCCH;
indicated by a Dedicated-RRC message in a PDSCH;
indicated by a broadcast message;
indicated by the broadcast message and the Dedicated-RRC message; and
indicated by the broadcast message and DCI.

Optionally, if the communication device is a terminal in a sidelink, the first information is received in one of the following manners:

indicated by a PSCCH;
indicated in a PSSCH; and
indicated by a broadcast message.

Optionally, the third receiving module is configured to receive, by using the broadcast message, a signal parameter and index value correspondence table sent by the transmit end; and receive, by using the Dedicated-RRC message or the DCI, an index value of the signal parameter corresponding to the encoded information sent by the transmit end.

Optionally, the information receiving apparatus 150 further includes:

a fourth receiving module, configured to receive third information sent by the transmit end, where the third information includes an adjusted signal parameter or indication information of an adjusted signal parameter.

Optionally, if the communication device is a terminal in an uplink and a downlink, the third information is received in at least one of the following manners:

indicated by a PDCCH;
indicated by a Dedicated-RRC message in a PDSCH;
indicated by a broadcast message;
indicated by the broadcast message and the Dedicated-RRC message; and
indicated by the broadcast message and DCI; and
if the communication device is a terminal in a sidelink, the third information is received in one of the following manners:

indicated by a PSCCH;
indicated in a PSSCH; and
indicated by a broadcast message.

The information receiving apparatus in this embodiment of this application may be an apparatus, or may be a component, an integrated circuit, or a chip in a terminal. The apparatus may be a mobile terminal or may be a non-mobile terminal. For example, the mobile terminal may include, but not limited to, a type of the terminal 11 listed above. The non-mobile terminal may be a server, a network attached storage (Network Attached Storage, NAS), a personal computer (personal computer, PC), a television (television, TV), a teller machine, a self-service machine, or the like.

This is not specifically limited in this embodiment of this application.

The information receiving apparatus in this embodiment of this application may be an apparatus with an operating system. The operating system may be an Android (Android) operating system, an ios operating system, or another possible operating system. This is not specifically limited in this embodiment of this application.

Referring to FIG. 16, this embodiment of this application further provides an information receiving method, applicable to a communication device, and including the following steps.

Step 161. Receive encoded information sent by a transmit end, where the encoded information is generated by the transmit end performing OVXDM or FTN waveform encoding on data, and the encoded information is generated and/or sent based on a signal parameter.

Step 161. Receive first information sent by the transmit end, where the first information includes the signal parameter corresponding to the encoded information or indication information of the signal parameter.

Step 162. Decode the encoded information according to the signal parameter corresponding to the encoded information and indicated by the first information.

In this embodiment of this application, a transmit end of encoded information may indicate a signal parameter corresponding to the encoded information to a receive end, and the receive end determines a decoding algorithm according to the signal parameter, to control the decoding complexity of the receive end, thereby ensuring that decoding is performed accurately and efficiently.

Optionally, the signal parameter includes at least one of the following:

an overlapped time domain coefficient $\tau$;
a symbol modulation order corresponding to $\tau$;
$K_1$ defined by OVXDM;
K defined by OVXDM or $K_2$ defined by cascaded OVXDM;
a symbol modulation order corresponding to $K$ or $K_2$;
an overlapped frequency domain coefficient $\zeta$;
N defined by OVXDM;
a symbol modulation order corresponding to $N$;
a bit rate at which the encoded information is sent; and
a parameter of a filter.

Optionally, if the communication device is a terminal in an uplink and a downlink, the first information is received in at least one of the following manners:

through a PDCCH;
indicated by a Dedicated-RRC message in a PDSCH;
indicated by a broadcast message;
indicated by the broadcast message and the Dedicated-RRC message; and
indicated by the broadcast message and DCI; and
if the communication device is a terminal in a sidelink, the first information is received in one of the following manners:

indicated by a PSCCH;
indicated in a PSSCH; and
indicated by a broadcast message.

Further, optionally, the receiving first information sent by the transmit end includes:

receiving, by using the broadcast message, a signal parameter and index value correspondence table sent by the transmit end; and
receiving, by using the Dedicated-RRC message or the DCI, an index value of the signal parameter corresponding to the encoded information sent by the transmit end.

It should be noted that, the information receiving method provided in the embodiments of this application may be performed by an information receiving apparatus or a control module configured to perform the information receiving method in the information receiving apparatus. In this embodiment of this application, the information receiving apparatus provided in the embodiments of this application is described by using an example in which the information receiving apparatus performs the information receiving method.

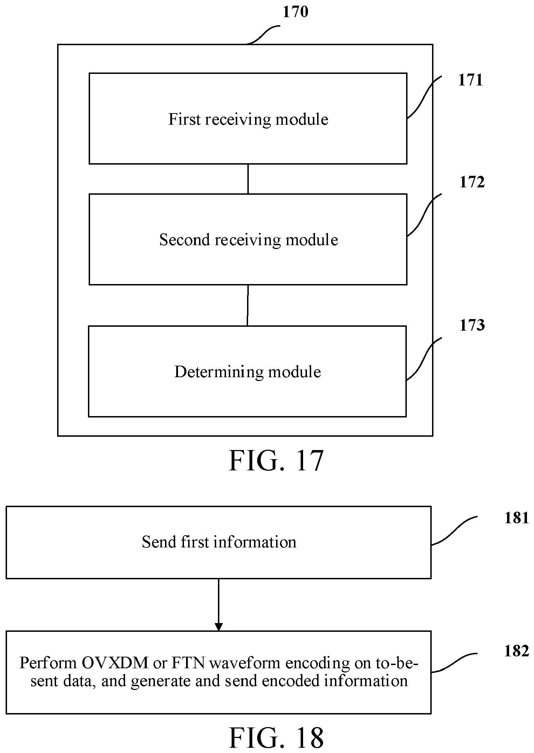

Referring to FIG. 17, this embodiment of this application further provides an information receiving apparatus 170, including:

a first receiving module 171, configured to receive encoded information sent by a transmit end, where the encoded information is generated by the transmit end performing OVXDM or FTN waveform encoding on data, and the encoded information is generated and/or sent based on a signal parameter;

a second receiving module 172, configured to receive first information sent by the transmit end, where the first information includes the signal parameter corresponding to the encoded information or indication information of the signal parameter; and

a determining module 173, configured to decode the encoded information according to the signal parameter corresponding to the encoded information and indicated by the first information and determine feedback information.

In this embodiment of this application, a transmit end of encoded information may indicate a signal parameter corresponding to the encoded information to a receive end, and the receive end determines a decoding algorithm according to the signal parameter, to control the decoding complexity of the receive end, thereby ensuring that decoding is performed accurately and efficiently.

Optionally, the signal parameter includes at least one of the following:

an overlapped time domain coefficient $\tau$;
a symbol modulation order corresponding to $\tau$;
$K_1$ defined by OVXDM;
K defined by OVXDM or $K_2$ defined by cascaded OVXDM;
a symbol modulation order corresponding to $K$ or $K_2$;
an overlapped frequency domain coefficient $\zeta$;
N defined by OVXDM;
a symbol modulation order corresponding to $N$;
a bit rate at which the encoded information is sent; and
a parameter of a filter.

Optionally, if the communication device is a terminal in an uplink and a downlink, the first information is received in at least one of the following manners:

through a PDCCH;
indicated by a Dedicated-RRC message in a PDSCH;
indicated by a broadcast message;
indicated by the broadcast message and the Dedicated-RRC message; and
indicated by the broadcast message and DCI; and

if the communication device is a terminal in a sidelink, the first information is received in one of the following manners:

indicated by a PSCCH;
indicated in a PSSCH; and
indicated by a broadcast message.

Further, optionally, the receiving module is configured to receive, by using the broadcast message, a signal parameter and index value correspondence table sent by the transmit end; and receiving, by using the Dedicated-RRC message or the DCI, an index value of the signal parameter corresponding to the encoded information sent by the transmit end.

Referring to FIG. 18, this embodiment of this application further provides an information sending method, applicable to a communication device, and including the following steps.

Step 181. Send first information.

Step 182. Perform OVXDM or FTN waveform encoding on data, and generate and send encoded information, where the encoded information is generated and/or sent based on a signal parameter, and the first information includes the signal parameter or indication information of the signal parameter.

In this embodiment of this application, a transmit end of encoded information may indicate a signal parameter corresponding to the encoded information to a receive end, so that the receive end determines a decoding algorithm according to the signal parameter, to control the decoding complexity of the receive end, thereby ensuring that decoding is performed accurately and efficiently.

Optionally, the signal parameter includes at least one of the following:

an overlapped time domain coefficient $\tau$;
a symbol modulation order corresponding to $\tau$;

$K_1$ defined by OVXDM;
K defined by OVXDM or $K_2$ defined by cascaded OVXDM;
a symbol modulation order corresponding to $K$ or $K_2$;
an overlapped frequency domain coefficient $\zeta$;
N defined by OVXDM;
a symbol modulation order corresponding to $N$;
a bit rate at which the encoded information is sent; and
a parameter of a filter.

Optionally, if the communication device is a network-side device, the first information is sent in one of the following manners:

through a PDCCH;
indicated by a Dedicated-RRC message in a PDSCH;
indicated by a broadcast message;
indicated by the broadcast message and the Dedicated-RRC message; and
indicated by the broadcast message and DCI; and
if the communication device is a terminal, the first information is sent in one of the following manners:

indicated by a PSCCH;
indicated in a PSSCH; and
indicated by a broadcast message.

Further, optionally, the sending first information includes:

sending a signal parameter and index value correspondence table by using the broadcast message; and
sending an index value of the signal parameter corresponding to the encoded information by using the Dedicated-RRC message or the DCI.

It should be noted that, the information sending method provided in the embodiments of this application may be performed by an information sending apparatus or a control module configured to perform the information sending method in the information sending apparatus. In this embodiment of this application, the information sending apparatus provided in the embodiments of this application is described by using an example in which the information sending apparatus performs the information sending method.

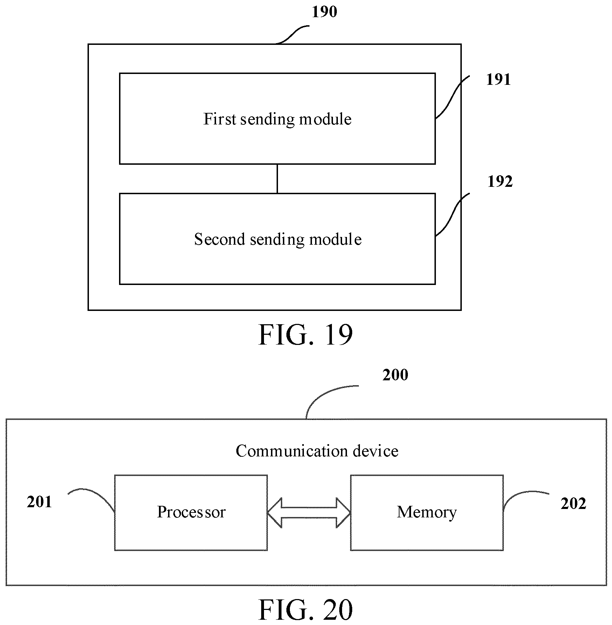

Referring to FIG. 19, this embodiment of this application further provides an information sending apparatus 190, including:

a first sending module 191, configured to send first information; and
a second sending module 192, configured to perform OVXDM or FTN waveform encoding on data, and generate and send encoded information, where the encoded information is generated and/or sent based on a signal parameter, and the first information includes the signal parameter or indication information of the signal parameter.

In this embodiment of this application, a transmit end of encoded information may indicate a signal parameter corresponding to the encoded information to a receive end, so that the receive end determines a decoding algorithm according to the signal parameter, to control the decoding complexity of the receive end, thereby ensuring that decoding is performed accurately and efficiently.

Optionally, the signal parameter includes at least one of the following:

an overlapped time domain coefficient $\tau$;
a symbol modulation order corresponding to $\tau$;
$K_1$ defined by OVXDM;
K defined by OVXDM or $K_2$ defined by cascaded OVXDM;
a symbol modulation order corresponding to $K$ or $K_2$;
an overlapped frequency domain coefficient $\zeta$;
N defined by OVXDM;
a symbol modulation order corresponding to $N$;
a bit rate at which the encoded information is sent; and
a parameter of a filter.

Optionally, if the communication device is a network-side device, the first information is sent in one of the following manners:

through a PDCCH;
indicated by a Dedicated-RRC message in a PDSCH;
indicated by a broadcast message;
indicated by the broadcast message and the Dedicated-RRC message; and
indicated by the broadcast message and DCI; and
if the communication device is a terminal, the first information is sent in one of the following manners:

indicated by a PSCCH;
indicated in a PSSCH; and
indicated by a broadcast message.

Further, optionally, the first sending module 191 is configured to send a signal parameter and index value correspondence table by using the broadcast message; and send an index value of the signal parameter corresponding to the encoded information by using the Dedicated-RRC message or the DCI.

As shown in FIG. 20, this embodiment of this application further provides a communication device 200, including a processor 201, a memory 202, and programs or instructions stored on the memory 202 and executable on the processor 201. For example, the programs or the instructions are executed by the processor 201 to implement each process of the foregoing embodiments of the information sending method, and the same technical effects can be achieved. Alternatively, the programs or the instructions are executed by the processor 201 to implement each process of the foregoing embodiments of the information receiving method, and the same technical effect can be achieved. To avoid repetition, details are not repeated herein.

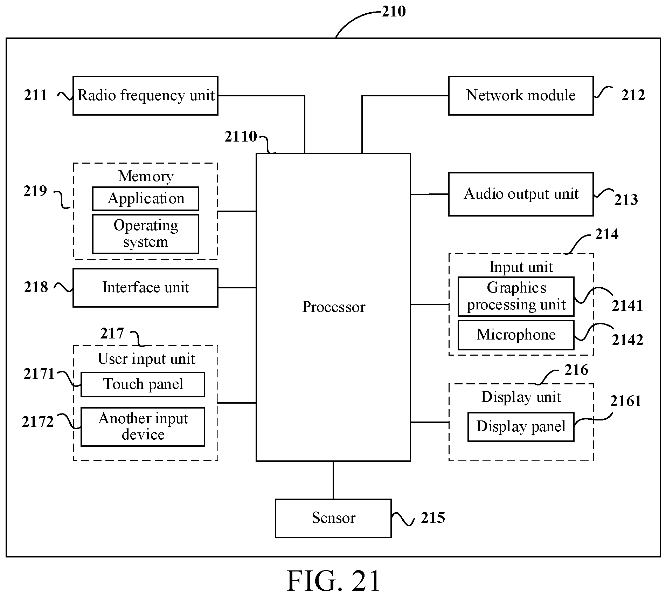

FIG. 21 is a schematic diagram of a hardware structure of a terminal according to an embodiment of this application. The terminal 210 includes, but is not limited to, components such as a radio frequency unit 211, a network module 212, an audio output unit 213, an input unit 214, a sensor 215, a display unit 216, a user input unit 217, an interface unit 218, a memory 219, and a processor 2110.

A person skilled in the art may understand that the terminal 210 may further include the power supply (such as a battery) for supplying power to the components. The power supply may logically connect to the processor 2110 by using a power supply management system, thereby implementing functions, such as charging, discharging, and power consumption management, by using the power supply management system. A terminal structure shown in FIG. 21 does not constitute a limitation to the terminal, and the terminal may comprise more or fewer components than those shown in the figure, or some components may be combined, or a different component deployment may be used. Details are not described herein again.

It should be understood that in this embodiment of this application, the input unit 214 may include a graphics processing unit (Graphics Processing Unit, GPU) 2141 and a microphone 2142. The graphics processing unit 2141 performs processing on image data of a static picture or a video that is obtained by an image acquisition device (for example, a camera) in a video acquisition mode or an image acquisition mode. The display unit 216 may include a display panel 2161, for example, the display panel 2161 configured in a form such as a liquid crystal display or an organic light-emitting diode. The user input unit 217 includes a touch panel 2171 and another input device 2172. The touch panel 2171 is also referred to as a touchscreen. The touch panel 2171 may include two parts: a touch detection apparatus and a touch controller. The another input device 2172 may include, but not limited to, a physical keyboard, a functional key (such as a volume control key or a switch key), a track ball, a mouse, and a joystick, which are not described herein in detail.

In this embodiment of this application, after receiving downlink data from a network-side device, the radio frequency unit 211 sends the downlink data to the processor 2110 for processing. In addition, uplink data is sent to the network-side device. Generally, the radio frequency unit 211 includes, but is not limited to, an antenna, at least one amplifier, a transceiver, a coupler, a low noise amplifier, a duplexer, and the like.

The memory 219 may be configured to store a software program or instructions and various data. The memory 219 may mainly include a program or instruction storage area and a data storage area. The program or instruction storage area may store an operating system, an application program or instruction required by at least one function (for example, a sound playback function and an image display function), and the like. In addition, the memory 219 may include a high speed random access memory, and may further include a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. For example, at least one magnetic disk storage device, a flash memory device, or other on-volatile solid-state storage devices.

The processor 2110 may include one or more processing units. Optionally, the processor 2110 may integrate an application processor and a modem. The application processor mainly processes an operating system, a user interface, an application program or instructions, and the like. The modem mainly processes wireless communication, for example, a baseband processor. It may be understood that the foregoing modem may either not be integrated into the processor 2110.

If the terminal 210 is a transmit end,

the radio frequency unit 211 is configured to perform OVXDM or FTN waveform encoding on data, and generate and send encoded information, where the encoded information is generated and/or sent based on a signal parameter; and

the processor 2110 is configured to adjust the signal parameter according to the feedback information.

Optionally, the signal parameter includes at least one of the following:

an overlapped time domain coefficient $\tau$;
a symbol modulation order corresponding to $\tau$;
$K_1$ defined by OVXDM;
K defined by OVXDM or $K_2$ defined by cascaded OVXDM;
a symbol modulation order corresponding to $K$ or $K_2$;
an overlapped frequency domain coefficient $\zeta$;
N defined by OVXDM;
a symbol modulation order corresponding to $N$;
a bit rate at which the encoded information is sent; and
a parameter of a filter.

Optionally, the radio frequency unit 211 is further configured to send first information to the receive end, where the first information includes the signal parameter or indication information of the signal parameter.

Optionally, if the communication device is a terminal, the first information is sent in one of the following manners:

indicated by a PSCCH;
indicated in a PSSCH; and
indicated by a broadcast message.

Optionally, the radio frequency unit 211 is configured to send a signal parameter and index value correspondence table by using the broadcast message; and send an index value of the signal parameter corresponding to the encoded information by using the Dedicated-RRC message or the DCI.

Optionally, the feedback information is second information or feedback information used for feeding back whether the encoded information is successfully parsed, where

the second information is one of the following:

first-type second information, where the first-type second information includes at least one of the following: a bit error rate and a channel measurement parameter, where the channel measurement parameter is a parameter affecting equivalent ISI and/or equivalent ICI in a channel; and

second-type second information, where the second-type second information includes: a suggested signal parameter or indication information of a suggested signal parameter.

Optionally, if the communication device is a network-side device, the second information is received in at least one of the following manners:

a PUSCH;
a PUCCH; and
a PLTFCH; and
if the communication device is a terminal, the second information is received in at least one of the following manners:

a PSSCH;
a PSCCH; and
a PSFCH.

Optionally, the channel measurement parameter includes at least one of the following: a signal to interference plus noise ratio, a multipath quantity, a residual frequency offset, a Doppler frequency shift, and a relative speed.

Optionally, the indication information of the suggested signal parameter is an index value of a signal parameter; and the processor 2110 is configured to search a signal parameter and index value correspondence table according to a received index value of the suggested signal parameter, and determine a signal parameter corresponding to the received index value; and adjust a current signal parameter according to the signal parameter corresponding to the received index value.

Optionally, the signal parameter and index value correspondence table is agreed on in a protocol or is configured by the communication device.

Optionally, the indication information of the suggested signal parameter is indication information used for indicating increasing or decreasing of a signal parameter; and the processor 2110 is configured to increase or decrease a current signal parameter according to a preset stepping according to the indication information of the suggested signal parameter.

Optionally, the feedback information is the feedback information used for feeding back whether the encoded information is successfully parsed, and the feedback information includes a negative acknowledgement NACK message indicating that the encoded information is not successfully parsed; and the processor 2110 is configured to adjust the signal parameter if a proportion or a quantity of NACK messages within a preset time period or within a preset quantity of subframes or slots is greater than a preset threshold.

Optionally, the radio frequency unit 211 is further configured to send third information to the receive end, where the third information includes an adjusted signal parameter or indication information of an adjusted signal parameter.

Optionally, if the communication device is a network-side device, the third information is sent in one of the following manners:

> indicated by a PDCCH;
> indicated by a Dedicated-RRC message in a PDSCH;
> indicated by a broadcast message;
> indicated by the broadcast message and the Dedicated-RRC message; and
> indicated by the broadcast message and DCI; and
> if the communication device is a terminal, the third information is sent in one of the following manners:

> indicated by a PSCCH;
> indicated in a PSSCH; and
> indicated by a broadcast message.

Optionally, the radio frequency unit 211 is further configured to send a pilot signal, where the pilot signal includes at least one of the following: a synchronization signal, a channel state information-reference signal, or a preset reference signal.

Alternatively, if the terminal 210 is a receive end,

> the radio frequency unit 211 is configured to receive encoded information sent by a transmit end, where the encoded information is generated by the transmit end performing OVXDM or FTN waveform encoding on data, and the encoded information is generated and/or sent based on a signal parameter;
> the processor 2110 is configured to decode the encoded information, and determine feedback information; and
> the radio frequency unit 211 is configured to send the feedback information to the transmit end, where the feedback information is used for the transmit end to adjust the signal parameter.

Optionally, the signal parameter includes at least one of the following:

> an overlapped time domain coefficient $\tau$;
> a symbol modulation order corresponding to $\tau$;
> $K_1$ defined by OVXDM;
> K defined by OVXDM or $K_2$ defined by cascaded OVXDM;
> a symbol modulation order corresponding to $K$ or $K_2$;
> an overlapped frequency domain coefficient $\zeta$;
> N defined by OVXDM;
> a symbol modulation order corresponding to $N$;
> a bit rate at which the encoded information is sent; and
> a parameter of a filter.

Optionally, the feedback information is second information or feedback information used for feeding back whether the encoded information is successfully parsed, where
the second information is one of the following:

first-type second information, where the first-type second information includes at least one of the following: a bit error rate and a channel measurement parameter, where the channel measurement parameter is a parameter affecting equivalent ISI and/or equivalent ICI in a channel; and
second-type second information, where the second-type second information includes: a suggested signal parameter or indication information of a suggested signal parameter.

Optionally, if the communication device is a terminal in an uplink and a downlink, the second information is sent in at least one of the following manners:

a PUSCH;
a PUCCH; and
a PLTFCH; and
if the communication device is a terminal in a sidelink, the second information is sent in at least one of the following manners:

a PSSCH;
a PSCCH; and
a PSFCH.

Optionally, the channel measurement parameter includes at least one of the following: a signal to interference plus noise ratio, a multipath quantity, a residual frequency offset, a Doppler frequency shift, and a relative speed.
Optionally, the radio frequency unit 211 is further configured to receive a pilot signal sent by the transmit end, where the pilot signal includes at least one of the following: a synchronization signal, a channel state information-reference signal, or a preset reference signal; and
the processor 2110 is further configured to measure a channel according to the pilot signal, to obtain the channel measurement parameter.
Optionally, when the second information is the second-type second information, the processor 2110 is further configured to obtain reference information, where the reference information includes at least one of the following: the channel measurement parameter, the bit error rate, and a capability of the communication device; and determine the suggested signal parameter according to the reference information.
Optionally, the indication information of the suggested signal parameter is an index value of a signal parameter or indication information used for indicating increasing or decreasing of a signal parameter.
Optionally, the radio frequency unit 211 is further configured to receive first information sent by the transmit end, where the first information includes the signal parameter corresponding to the encoded information or indication information of the signal parameter; and
the processor 2110 is further configured to decode the encoded information according to the signal parameter corresponding to the encoded information and indicated by the first information.
Optionally, if the communication device is a terminal in an uplink and a downlink, the first information is received in at least one of the following manners:

through a PDCCH;
indicated by a Dedicated-RRC message in a PDSCH;
indicated by a broadcast message;
indicated by the broadcast message and the Dedicated-RRC message; and
indicated by the broadcast message and DCI.

Optionally, if the communication device is a terminal in a sidelink, the first information is received in one of the following manners:

indicated by a PSCCH;
indicated in a PSSCH; and
indicated by a broadcast message.

Optionally, the radio frequency unit 211 is configured to receive, by using the broadcast message, a signal parameter and index value correspondence table sent by the transmit end; and receive, by using the Dedicated-RRC message or the DCI, an index value of the signal parameter corresponding to the encoded information sent by the transmit end.

Optionally, the radio frequency unit 211 is further configured to receive third information sent by the transmit end, where the third information includes an adjusted signal parameter or indication information of an adjusted signal parameter.

Optionally, if the communication device is a terminal in an uplink and a downlink, the third information is received in at least one of the following manners:

indicated by a PDCCH;
indicated by a Dedicated-RRC message in a PDSCH;
indicated by a broadcast message;
indicated by the broadcast message and the Dedicated-RRC message; and
indicated by the broadcast message and DCI; and
if the communication device is a terminal in a sidelink, the third information is received in one of the following manners:

indicated by a PSCCH;
indicated in a PSSCH; and
indicated by a broadcast message.
If the terminal 210 is a receive end,
the radio frequency unit 211 is configured to receive first information and encoded information sent by a transmit end, where the encoded information is generated by the transmit end performing OVXDM or FTN waveform encoding on data, the encoded information is generated and/or sent based on a signal parameter, and the first information includes a signal parameter corresponding to the encoded information or indication information of the signal parameter; and
the processor 2110 is configured to decode the encoded information according to the signal parameter corresponding to the encoded information and indicated by the first information.

Optionally, the signal parameter includes at least one of the following:

an overlapped time domain coefficient $\tau$;
a symbol modulation order corresponding to $\tau$;
$K_1$ defined by OVXDM;
K defined by OVXDM or $K_2$ defined by cascaded OVXDM;
a symbol modulation order corresponding to $K$ or $K_2$;
an overlapped frequency domain coefficient $\zeta$;
N defined by OVXDM;
a symbol modulation order corresponding to $N$;
a bit rate at which the encoded information is sent; and
a parameter of a filter.

Optionally, if the communication device is a terminal in an uplink and a downlink, the first information is received in at least one of the following manners:

through a PDCCH;
indicated by a Dedicated-RRC message in a PDSCH;
indicated by a broadcast message;
indicated by the broadcast message and the Dedicated-RRC message; and
indicated by the broadcast message and DCI; and
if the communication device is a terminal in a sidelink, the first information is received in one of the following manners:

indicated by a PSCCH;
indicated in a PSSCH; and
indicated by a broadcast message.
If the terminal 210 is a transmit end,
the radio frequency unit 211 is configured to send first information;
the processor 2110 is configured to perform OVXDM or FTN waveform encoding on data, to generate encoded information; and

the radio frequency unit 211 is further configured to send the encoded information, where
the encoded information is generated and/or sent based on a signal parameter, and the first information includes the signal parameter or indication information of the signal parameter.

Optionally, the signal parameter includes at least one of the following:

an overlapped time domain coefficient $\tau$;
a symbol modulation order corresponding to $\tau$;
$K_1$ defined by OVXDM;
K defined by OVXDM or $K_2$ defined by cascaded OVXDM;
a symbol modulation order corresponding to $K$ or $K_2$;
an overlapped frequency domain coefficient $\zeta$;
N defined by OVXDM;
a symbol modulation order corresponding to $N$;
a bit rate at which the encoded information is sent; and
a parameter of a filter.

Optionally, if the communication device is a network-side device, the first information is sent in one of the following manners:

through a PDCCH;
indicated by a Dedicated-RRC message in a PDSCH;
indicated by a broadcast message;
indicated by the broadcast message and the Dedicated-RRC message; and
indicated by the broadcast message and DCI; and
if the communication device is a terminal, the first information is sent in one of the following manners:

indicated by a PSCCH;
indicated in a PSSCH; and
indicated by a broadcast message.

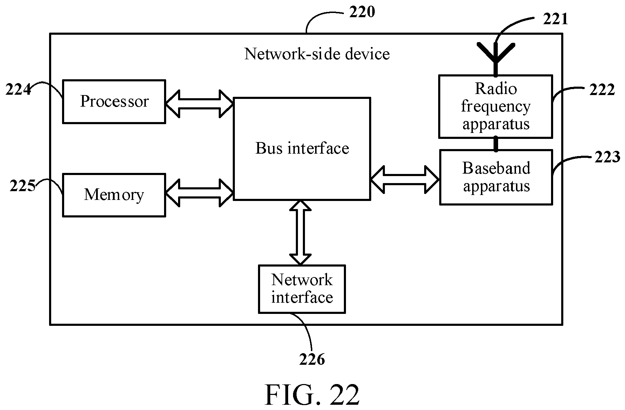

An embodiment of this application further provides a network-side device. As shown in FIG. 22, the network-side device 220 includes an antenna 221, a radio frequency apparatus 222, and a baseband apparatus 223. The antenna 221 is connected to the radio frequency apparatus 222. In an uplink direction, the radio frequency apparatus 222 receives, by using the antenna 221, information, and sends the received information to the baseband apparatus 223 for processing. In a downlink direction, the baseband apparatus 223 processes to-be-sent information, and sends the information to the radio frequency apparatus 222. The radio frequency apparatus 222 processes the received information and sends out the information by using the antenna 221.

The frequency band processing apparatus may be located in the baseband apparatus 223, the methods performed by the network-side device in the foregoing embodiments may be implemented in the baseband apparatus 223, and the baseband apparatus 223 includes a processor 224 and a memory 225.

The baseband apparatus 223 may include, for example, at least one baseband plate. A plurality of chips are disposed on the baseband plate. As shown in FIG. 22, one of the plurality of chips is, for example, the processor 224, and is connected to the memory 225, to invoke a program in the memory 225 to perform operations of the network device in the foregoing method embodiment.

The baseband apparatus 223 may further include a network interface 226, configured to exchange information with the radio frequency apparatus 222. The interface is, for example, a common public radio interface (common public radio interface, CPRI).

Specifically, the network-side device in this embodiment of this application further includes: instructions or programs stored on the memory 225 and executable on the processor 224, the processor 224 invokes the instructions or programs in the memory 225 to perform the methods performed by the modules in FIG. 14 or FIG . 18, and the same technical effects are achieved. To avoid repetitions, details are not described herein again.

An embodiment of this application further provides a readable storage medium, storing programs or instructions, where the programs or the instructions are executed by a processor to implement each process of the foregoing embodiments of the information sending method, and the same technical effect can be achieved. To avoid repetition, details are not repeated herein.

An embodiment of this application further provides a readable storage medium, storing programs or instructions, where the programs or the instructions are executed by a processor to implement each process of the foregoing embodiments of the information receiving method, and the same technical effect can be achieved. To avoid repetition, details are not repeated herein.

The processor is the processor in the communication device in the foregoing embodiment. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip, including a processor and a communication interface, where the communication interface is coupled to the processor, and the processor is configured to run programs or instructions of a network-side device, to implement each process of the foregoing embodiments of the information sending method, and the same technical effect can be achieved. To avoid repetition, details are not repeated herein.

An embodiment of this application further provides a chip, including a processor and a communication interface, where the communication interface is coupled to the processor, and the processor is configured to run programs or instructions of a network-side device, to implement each process of the foregoing embodiments of the information receiving method, and the same technical effect can be achieved. To avoid repetition, details are not repeated herein.

It should be understood that, the chip mentioned in this embodiment of this application may also be referred to as a system-level chip, a system chip, a chip system, a system on chip, or the like.

It may be understood that, the embodiments described in the present disclosure may be implemented by using software, hardware, firmware, middleware, microcode, or a combination thereof. For implementation by hardware, a module, a unit, a sub-module, a subunit, or the like may be implemented in one or more application-specific integrated circuits (Application Specific Integrated Circuits, ASIC), a digital signal processor (Digital Signal Processing, DSP), a digital signal processing device (DSP Device, DSPD), a programmable logic device (Programmable Logic Device, PLD), a field-programmable gate array (Field-Programmable Gate Array, FPGA), a general purpose processor, a controller, a microcontroller, a microprocessor, and other electronic units configured to perform the functions described in this application, or a combination thereof.

It should be noted that, the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that, the scope of the methods and apparatuses in the implementations of this application is not limited to performing the functions in the order shown or discussed, but may further include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

Through the descriptions of the foregoing implementations, a person skilled in the art may clearly understand that the methods in the foregoing embodiments may be implemented through software and a necessary general hardware platform, and certainly, may also be implemented by hardware, but in many cases, the former manner is a better implementation. Based on such an understanding, the technical solutions of this application essentially or the part contributing to the related art may be implemented in the form of a software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The embodiments of this application are described above with reference to the accompanying drawings. However, this application is not limited to the foregoing specific implementations. The foregoing specific implementations are illustrative instead of limitative. Enlightened by this application, a person of ordinary skill in the art can make many forms without departing from the idea of this application and the scope of protection of the claims. All of the forms fall within the protection of this application.

**Claims**

1. An information sending method, applicable to a communication device, and comprising:

   performing overlapped X-domain multiplexing OVXDM or faster-than-Nyquist FTN waveform encoding on data, and generating and sending encoded information, wherein the encoded information is generated and/or sent based on a signal parameter;
   receiving feedback information sent by a receive end of the encoded information; and
   adjusting the signal parameter according to the feedback information.

**2.** The information sending method according to claim 1, wherein the signal parameter comprises at least one of the following:

an overlapped time domain coefficient $\tau$;
a symbol modulation order corresponding to $\tau$;
K_1 defined by OVXDM;
K defined by OVXDM or K_2 defined by cascaded OVXDM;
a symbol modulation order corresponding to K or K_2;
an overlapped frequency domain coefficient $\zeta$;
N defined by OVXDM;
a symbol modulation order corresponding to N;
a bit rate at which the encoded information is sent; and
a parameter of a filter.

**3.** The information sending method according to claim 1, wherein before the receiving feedback information sent by a receive end of the encoded information, the method further comprises:
sending first information to the receive end, wherein the first information comprises the signal parameter or indication information of the signal parameter.

**4.** The information sending method according to claim 3, where
if the communication device is a network-side device, the first information is sent in one of the following manners:

through a physical downlink control channel PDCCH;
indicated by a dedicated-radio resource control Dedicated-RRC message in a physical downlink shared channel PDSCH;
indicated by a broadcast message;
indicated by the broadcast message and the Dedicated-RRC message; and
indicated by the broadcast message and DCI.

**5.** The information sending method according to claim 3, where
if the communication device is a terminal, the first information is sent in one of the following manners:

indicated by a physical sidelink control channel PSCCH;
indicated in a physical sidelink shared channel PSSCH; and
indicated by a broadcast message.

**6.** The information sending method according to claim 4, wherein the sending first information to the receive end comprises:

sending a signal parameter and index value correspondence table by using the broadcast message; and
sending an index value of the signal parameter corresponding to the encoded information by using the Dedicated-RRC message or the DCI.

**7.** The information sending method according to claim 1, where

the feedback information is second information or feedback information used for feeding back whether the encoded information is successfully parsed, where
the second information is one of the following:

first-type second information, wherein the first-type second information comprises at least one of the following: a bit error rate and a channel measurement parameter; and
second-type second information, wherein the second-type second information comprises:
a suggested signal parameter or indication information of a suggested signal parameter.

**8.** The information sending method according to claim 7, where
if the communication device is a network-side device, the second information is received in at least one of the following manners:

a physical uplink shared channel PUSCH;
a physical uplink control channel PUCCH; and
a physical uplink feedback channel PUFCH.

9. The information sending method according to claim 7, where
if the communication device is a terminal, the second information is received in at least one of the following manners:

a physical sidelink shared channel PSSCH;
a physical sidelink control channel PSCCH; and
a physical sidelink feedback channel PSFCH.

10. The information sending method according to claim 7, wherein the channel measurement parameter comprises at least one of the following: a signal to interference plus noise ratio, a multipath quantity, a residual frequency offset, a Doppler frequency shift, and a relative speed.

11. The information sending method according to claim 7, wherein the indication information of the suggested signal parameter is an index value of a signal parameter; and the adjusting the signal parameter according to the feedback information comprises:

searching a signal parameter and index value correspondence table according to a received index value of the suggested signal parameter, and determining a signal parameter corresponding to the received index value; and adjusting a current signal parameter according to the signal parameter corresponding to the received index value.

12. The information sending method according to claim 11, wherein the signal parameter and index value correspondence table is agreed on in a protocol or is configured by the communication device.

13. The information sending method according to claim 7, wherein the indication information of the suggested signal parameter is indication information used for indicating increasing or decreasing of a signal parameter; and the adjusting the signal parameter according to the feedback information comprises:
increasing or decreasing a current signal parameter according to a preset stepping according to the indication information of the suggested signal parameter.

14. The information sending method according to claim 7, wherein the feedback information is the feedback information used for feeding back whether the encoded information is successfully parsed, and the feedback information comprises a negative acknowledgement NACK message indicating that the encoded information is not successfully parsed; and the adjusting the signal parameter according to the feedback information comprises:
adjusting the signal parameter if a proportion or a quantity of NACK messages within a preset time period or within a preset quantity of subframes or slots is greater than a preset threshold.

15. The information sending method according to claim 1, wherein after the adjusting the signal parameter according to the feedback information, the method further comprises:
sending third information to the receive end, wherein the third information comprises an adjusted signal parameter or indication information of an adjusted signal parameter.

16. The information sending method according to claim 15, where
if the communication device is a network-side device, the third information is sent in one of the following manners:

indicated by a PDCCH;
indicated by a Dedicated-RRC message in a PDSCH;
indicated by a broadcast message;
indicated by the broadcast message and the Dedicated-RRC message; and
indicated by the broadcast message and DCI.

17. The information sending method according to claim 15, where
if the communication device is a terminal, the third information is sent in one of the following manners:

indicated by a PSCCH;
indicated in a PSSCH; and

indicated by a broadcast message.

18. The information sending method according to claim 1, wherein before the receiving feedback information sent by a receive end of the encoded information, the method further comprises:
sending a pilot signal, wherein the pilot signal comprises at least one of the following: a synchronization signal, a channel state information-reference signal, or a preset reference signal.

19. An information receiving method, applicable to a communication device, and comprising:

receiving encoded information sent by a transmit end, wherein the encoded information is generated by the transmit end performing OVXDM or FTN waveform encoding on data, and the encoded information is generated and/or sent based on a signal parameter;
decoding the encoded information, and determining feedback information; and
sending the feedback information to the transmit end, wherein the feedback information is used for adjusting the signal parameter.

20. The information receiving method according to claim 19, wherein the signal parameter comprises at least one of the following:

an overlapped time domain coefficient $\tau$;
a symbol modulation order corresponding to $\tau$;
K_1 defined by OVXDM;
K defined by OVXDM or K_2 defined by cascaded OVXDM;
a symbol modulation order corresponding to K or K_2;
an overlapped frequency domain coefficient $\zeta$;
N defined by OVXDM;
a symbol modulation order corresponding to N;
a bit rate at which the encoded information is sent; and
a parameter of a filter.

21. The information receiving method according to claim 19, where

the feedback information is second information or feedback information used for feeding back whether the encoded information is successfully parsed, where
the second information is one of the following:

first-type second information, wherein the first-type second information comprises at least one of the following: a bit error rate and a channel measurement parameter; and
second-type second information, wherein the second-type second information comprises:
a suggested signal parameter or indication information of a suggested signal parameter.

22. The information receiving method according to claim 21, where
if the communication device is a terminal, the second information is sent in at least one of the following manners:

a PUSCH;
a PUCCH; and
a PUFCH.

23. The information receiving method according to claim 21, where
if the communication device is a terminal, the second information is sent in at least one of the following manners:

a PSSCH;
a PSCCH; and
a PSFCH.

24. The information receiving method according to claim 21, wherein the channel measurement parameter comprises at least one of the following: a signal to interference plus noise ratio, a multipath quantity, a residual frequency offset, a Doppler frequency shift, and a relative speed.

**25.** The information receiving method according to claim 21, wherein before the sending the feedback information to the transmit end, the method further comprises:

receiving a pilot signal sent by the transmit end, wherein the pilot signal comprises at least one of the following: a synchronization signal, a channel state information-reference signal, or a preset reference signal; and measuring a channel according to the pilot signal, to obtain the channel measurement parameter.

**26.** The information receiving method according to claim 21, wherein when the second information is the second-type second information, before the sending the feedback information to the transmit end, the method further comprises:

obtaining reference information, wherein the reference information comprises at least one of the following: the channel measurement parameter, the bit error rate, and a capability of the communication device; and determining the suggested signal parameter according to the reference information.

**27.** The information receiving method according to claim 21, wherein the indication information of the suggested signal parameter is an index value of a signal parameter or indication information used for indicating increasing or decreasing of a signal parameter.

**28.** The information receiving method according to claim 19, wherein before the decoding the encoded information, the method further comprises:

receiving first information sent by the transmit end, wherein the first information comprises the signal parameter corresponding to the encoded information or indication information of the signal parameter; and decoding the encoded information according to the signal parameter corresponding to the encoded information and indicated by the first information.

**29.** The information receiving method according to claim 28, where
if the communication device is a terminal, the first information is received in one of the following manners:

through a PDCCH;
indicated by a Dedicated-RRC message in a PDSCH;
indicated by a broadcast message;
indicated by the broadcast message and the Dedicated-RRC message; and
indicated by the broadcast message and DCI.

**30.** The information receiving method according to claim 28, where
if the communication device is a terminal, the first information is received in one of the following manners:

indicated by a PSCCH;
indicated in a PSSCH; and
indicated by a broadcast message.

**31.** The information receiving method according to claim 29, wherein the receiving first information sent by the transmit end comprises:

receiving, by using the broadcast message, a signal parameter and index value correspondence table sent by the transmit end; and
receiving, by using the Dedicated-RRC message or the DCI, an index value of the signal parameter corresponding to the encoded information sent by the transmit end.

**32.** The information receiving method according to claim 19, wherein after the sending the feedback information to the transmit end, the method further comprises:
receiving third information sent by the transmit end, wherein the third information comprises an adjusted signal parameter or indication information of an adjusted signal parameter.

**33.** The information receiving method according to claim 32, where
if the communication device is a terminal, the third information is received in one of the following manners:

indicated by a PDCCH;
indicated by a Dedicated-RRC message in a PDSCH;
indicated by a broadcast message;
indicated by the broadcast message and the Dedicated-RRC message; and
indicated by the broadcast message and DCI.

34. The information receiving method according to claim 32, where
if the communication device is a terminal, the third information is received in one of the following manners:

indicated by a PSCCH;
indicated in a PSSCH; and
indicated by a broadcast message.

35. An information sending apparatus, comprising:

a first sending module, configured to perform OVXDM or FTN waveform encoding on data, and generate and send encoded information, wherein the encoded information is generated and/or sent based on a signal parameter;
a first receiving module, configured to receive feedback information sent by a receive end of the encoded information; and
an adjustment module, configured to adjust the signal parameter according to the feedback information.

36. An information receiving apparatus, comprising:

a first receiving module, configured to receive encoded information sent by a transmit end, wherein the encoded information is generated by the transmit end performing OVXDM or FTN waveform encoding on data, and the encoded information is generated and/or sent based on a signal parameter;
a first determining module, configured to decode the encoded information, and determine feedback information; and
a first sending module, configured to send the feedback information to the transmit end, wherein the feedback information is used for the transmit end to adjust the signal parameter.

37. An information receiving method, applicable to a communication device, and comprising:

receiving encoded information sent by a transmit end, wherein the encoded information is generated by the transmit end performing OVXDM or FTN waveform encoding on data, and the encoded information is generated and/or sent based on a signal parameter;
receiving first information sent by the transmit end, wherein the first information comprises the signal parameter corresponding to the encoded information or indication information of the signal parameter; and
decoding the encoded information according to the signal parameter indicated by the first information.

38. The information receiving method according to claim 37, wherein the signal parameter comprises at least one of the following:

an overlapped time domain coefficient $\tau$;
a symbol modulation order corresponding to $\tau$;
K_1 defined by OVXDM;
K defined by OVXDM or K_2 defined by cascaded OVXDM;
a symbol modulation order corresponding to K or K_2;
an overlapped frequency domain coefficient $\zeta$;
N defined by OVXDM;
a symbol modulation order corresponding to N;
a bit rate at which the encoded information is sent; and
a parameter of a filter.

39. The information receiving method according to claim 37, where
if the communication device is a terminal, the first information is received in one of the following manners:

through a PDCCH;
indicated by a Dedicated-RRC message in a PDSCH;
indicated by a broadcast message;
indicated by the broadcast message and the Dedicated-RRC message; and
indicated by the broadcast message and DCI.

**40.** The information receiving method according to claim 37, where
if the communication device is a terminal, the first information is received in one of the following manners:

indicated by a PSCCH;
indicated in a PSSCH; and
indicated by a broadcast message.

**41.** An information receiving apparatus, applicable to a communication device, and comprising:

a first receiving module, configured to receive encoded information sent by a transmit end, wherein the encoded information is generated by the transmit end performing OVXDM or FTN waveform encoding on data, and the encoded information is generated and/or sent based on a signal parameter;
a second receiving module, configured to receive first information sent by the transmit end, wherein the first information comprises the signal parameter corresponding to the encoded information or indication information of the signal parameter; and
a determining module, configured to decode the encoded information according to the signal parameter corresponding to the encoded information and indicated by the first information.

**42.** An information sending method, applicable to a communication device, and comprising:

sending first information; and
performing OVXDM or FTN waveform encoding on data, and generating and sending encoded information, wherein the encoded information is generated and/or sent based on a signal parameter, and the first information comprises the signal parameter or indication information of the signal parameter.

**43.** The information sending method according to claim 42, wherein the signal parameter comprises at least one of the following:

an overlapped time domain coefficient $\tau$;
a symbol modulation order corresponding to $\tau$;
K_1 defined by OVXDM;
K defined by OVXDM or K_2 defined by cascaded OVXDM;
a symbol modulation order corresponding to K or K_2;
an overlapped frequency domain coefficient $\zeta$;
N defined by OVXDM;
a symbol modulation order corresponding to N;
a bit rate at which the encoded information is sent; and
a parameter of a filter.

**44.** The information sending method according to claim 42, where
if the communication device is a network-side device, the first information is sent in one of the following manners:

through a PDCCH;
indicated by a Dedicated-RRC message in a PDSCH;
indicated by a broadcast message;
indicated by the broadcast message and the Dedicated-RRC message; and
indicated by the broadcast message and DCI.

**45.** The information sending method according to claim 42, where
if the communication device is a terminal, the first information is sent in one of the following manners:

indicated by a PSCCH;

indicated in a PSSCH; and
indicated by a broadcast message.

46. An information sending apparatus, comprising:

a first sending module, configured to send first information; and
a second sending module, configured to perform OVXDM or FTN waveform encoding on data, and generate and send encoded information, wherein the encoded information is generated and/or sent based on a signal parameter, and the first information comprises the signal parameter or indication information of the signal parameter.

47. A communication device, comprising a processor, a memory, and programs or instructions stored in the memory and executable on the processor, wherein the programs or the instructions are executed by the processor to implement the steps of the information sending method according to any one of claims 1 to 18, or the programs or the instructions are executed by the processor to implement the steps of the information receiving method according to any one of claims 19 to 34, or the programs or the instructions are executed by the processor to implement the steps of the information receiving method according to any one of claims 37 to 40, or the programs or the instructions are executed by the processor to implement the steps of the information sending method according to any one of claims 42 to 45.

48. A readable storage medium, storing programs or instructions, wherein the programs or the instructions are executed by a processor to implement the steps of the information sending method according to any one of claims 1 to 18, or implement the steps of the information receiving method according to any one of claims 19 to 34, or implement the steps of the information receiving method according to any one of claims 37 to 40, or implement the steps of the information sending method according to any one of claims 42 to 45.

49. A chip, comprising a processor and a communication interface, wherein the communication interface is coupled to the processor, and the processor is configured to run programs or instructions of a network-side device, to implement the steps of the information sending method according to any one of claims 1 to 18, or implement the steps of the information receiving method according to any one of claims 19 to 34, or implement the steps of the information receiving method according to any one of claims 37 to 40, or implement the steps of the information sending method according to any one of claims 42 to 45.

50. A computer program product, wherein the program product is executed by at least one processor to implement the information sending method according to any one of claims 1 to 18, or implement the information receiving method according to any one of claims 19 to 34, or implement the information receiving method according to any one of claims 37 to 40, or implement the information sending method according to any one of claims 42 to 45.

51. A communication device, configured to perform the information sending method according to any one of claims 1 to 18, or configured to perform the information receiving method according to any one of claims 19 to 34, or configured to perform the information receiving method according to any one of claims 37 to 40, or configured to perform the information sending method according to any one of claims 42 to 45.

FIG. 1

FIG. 2

## FASTER THAN NYQUIST WITH SINC PULSES

T=1
(Nyquist)

t

T=.8 (FTN)

t

## FIG. 3

| Perform OVXDM or FTN waveform encoding on data, and generate and send encoded information, where the encoded information is generated and/or sent based on a signal parameter | 41 |

| Receive feedback information sent by a receive end of the encoded information | 42 |

| Adjust the signal parameter according to the feedback information | 43 |

## FIG. 4

Perform OVXDM or FTN waveform encoding on data, and generate and send encoded information, where the encoded information is generated and/or sent based on a signal parameter 51

Send first information to the receive end, where the first information includes the signal parameter or indication information of the signal parameter 52

Receive feedback information from the receive end of the encoded information 53

Adjust the signal parameter according to the feedback information 54

FIG. 5

| DCI | | RS | | RS | |
|-----|--|----|--|----|--|
|     |  |    |  |    |  |

FIG. 6

Perform OVXDM or FTN waveform encoding on data, and generate and send encoded information, where the encoded information is generated and/or sent based on a signal parameter /‾ 71

Send first information to the receive end, where the first information includes the signal parameter or indication information of the signal parameter /‾ 72

Receive feedback information from the receive end of the encoded information /‾ 73

Adjust the signal parameter according to the feedback information /‾ 74

Send third information to the receive end, where the third information includes an adjusted signal parameter or indication information of an adjusted signal parameter /‾ 75

FIG. 7

Receive encoded information sent by a transmit end, where the encoded information is generated by the transmit end performing OVXDM or FTM waveform encoding on data, and the encoded information is generated and/or sent based on a signal parameter    81

Decode the encoded information, and determine feedback information    82

Send the feedback information to the transmit end, where the feedback information is used for adjusting the signal parameter    83

FIG. 8

Receive encoded information sent by a transmit end, where the encoded information is generated by the transmit end performing OVXDM or FTM waveform encoding on data, and the encoded information is generated and/or sent based on a signal parameter    91

Receive first information sent by the transmit end    92

Decode the encoded information according to the signal parameter corresponding to the encoded information and indicated by the first information, and determine feedback information    93

Send the feedback information to the transmit end, where the feedback information is used for adjusting the signal parameter    94

FIG. 9

Receive encoded information sent by a transmit end, where the encoded information is generated by the transmit end performing OVXDM or FTM waveform encoding on data, and the encoded information is generated and/or sent based on a signal parameter — 101

Receive first information sent by the transmit end — 102

Decode the encoded information according to the signal parameter corresponding to the encoded information and indicated by the first information, and determine feedback information — 103

Send the feedback information to the transmit end — 104

Receive third information sent by the transmit end, where the feedback information is used for adjusting the signal parameter — 105

FIG. 10

Transmit end

Receive end

First information

Second information

Third information

FIG. 11

| Transmit end | Receive end 1 | Receive end 2 |
|---|---|---|

First information (broadcast)

Second information

Third information (dedicated radio resource control)

## FIG. 12

| Transmit end | Receive end 1 | Receive end 2 |
|---|---|---|

Correspondence table (broadcast)

Index (dedicated radio resource control or DCI) } First information

Index (dedicated radio resource control or DCI) } First information

Second information

Third information (dedicated radio resource control or DCI)

## FIG. 13

**140**

```
┌─────────────────────────────────────┐
│                                      │
│   ┌──────────────────────────┐  141  │
│   │                          │       │
│   │   First sending module   │       │
│   │                          │       │
│   └──────────────────────────┘       │
│                                      │
│   ┌──────────────────────────┐  142  │
│   │                          │       │
│   │   First receiving module │       │
│   │                          │       │
│   └──────────────────────────┘       │
│                                      │
│   ┌──────────────────────────┐  143  │
│   │                          │       │
│   │    Adjustment module     │       │
│   │                          │       │
│   └──────────────────────────┘       │
│                                      │
└─────────────────────────────────────┘
```

FIG. 14

150

151
First receiving module

152
First determining module

153
First sending module

FIG. 15

161
Receive encoded information sent by a transmit end

162
Receive first information sent by the transmit end

163
Perform decoding according to a signal parameter corresponding to the encoded information and indicated by the first information

FIG. 16

170

First receiving module 171

Second receiving module 172

Determining module 173

FIG. 17

Send first information 181

Perform OVXDM or FTN waveform encoding on to-be-sent data, and generate and send encoded information 182

FIG. 18

190

First sending module — 191

Second sending module — 192

FIG. 19

200

Communication device

201 — Processor ⟺ Memory — 202

FIG. 20

210

211 ~ Radio frequency unit

Network module ⌇ 212

2110 ⌐

219 ⌐ | Memory
       | Application
       | Operating
       | system

Audio output unit ⌇ 213

214 ⌐

218 ~ Interface unit

Input unit
Graphics
processing unit ⌇ 2141
Microphone ⌇ 2142

Processor

217 ⌐
User input unit
2171 ⌐ Touch panel
2172 ⌐ Another input
         device

216 ⌐
Display unit ⌐ 2161
Display panel

Sensor ~ 215

# FIG. 21

FIG. 22

## INTERNATIONAL SEARCH REPORT

| | |
|---|---|
| International application No. | |
| | **PCT/CN2021/106522** |

| | |
|---|---|
| **A.    CLASSIFICATION OF SUBJECT MATTER** | |
| H04B 7/06(2006.01)i | |
| According to International Patent Classification (IPC) or to both national classification and IPC | |

| **B.    FIELDS SEARCHED** |
|---|
| Minimum documentation searched (classification system followed by classification symbols) |
| H04B; H04L; H04W; H04Q |
| Documentation searched other than minimum documentation to the extent that such documents are included in the fields searched |
| Electronic data base consulted during the international search (name of data base and, where practicable, search terms used) |
| CNPAT, CNKI, WPI, EPODOC: 重叠复用, 超奈奎斯特, 波形编码, 编码信息, 发送, 信号参数, 反馈, 调整, 译码; OVXDM, FTN, superposition multiplexing, faster than Nyquist, waveform coding, information coding, transmission, signal parameter, feedback, adjustment, decoding |

| **C.    DOCUMENTS CONSIDERED TO BE RELEVANT** | | |
|---|---|---|
| Category* | Citation of document, with indication, where appropriate, of the relevant passages | Relevant to claim No. |
| X | CN 110870213 A (UNIVERSITE DU LUXEMBOURG) 06 March 2020 (2020-03-06) <br> description paragraphs 0003-0055 | 1-51 |
| X | US 2018076861 A1 (TELEFONAKTIEBOLAGET LM ERICSSON (PUBL)) 15 March 2018 (2018-03-15) <br> description paragraphs 0046-0071 | 1-51 |
| A | EP 3627786 A1 (SONY CORP.) 25 March 2020 (2020-03-25) <br> entire document | 1-51 |
| A | CN 109962748 A (SHENZHEN SUPERDATA LINK TECHNOLOGY CO., LTD.) 02 July 2019 (2019-07-02) <br> entire document | 1-51 |
| A | CN 109962752 A (SHENZHEN SUPERDATA LINK TECHNOLOGY CO., LTD.) 02 July 2019 (2019-07-02) <br> entire document | 1-51 |

☐ Further documents are listed in the continuation of Box C.        ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 September 2021** | **28 September 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

INTERNATIONAL SEARCH REPORT

Information on patent family members

International application No.

**PCT/CN2021/106522**

| Patent document cited in search report | | | Publication date (day/month/year) | Patent family member(s) | | | Publication date (day/month/year) |
|---|---|---|---|---|---|---|---|
| CN | 110870213 | A | 06 March 2020 | US | 2020014438 | A1 | 09 January 2020 |
| | | | | LU | 100110 | B1 | 07 September 2018 |
| | | | | WO | 2018158346 | A1 | 07 September 2018 |
| | | | | EP | 3590201 | A1 | 08 January 2020 |
| US | 2018076861 | A1 | 15 March 2018 | EP | 3284184 | A1 | 21 February 2018 |
| | | | | WO | 2016165761 | A1 | 20 October 2016 |
| EP | 3627786 | A1 | 25 March 2020 | WO | 2018211800 | A1 | 22 November 2018 |
| | | | | US | 2021152272 | A1 | 20 May 2021 |
| | | | | JP | 2018196029 | A | 06 December 2018 |
| CN | 109962748 | A | 02 July 2019 | None | | | |
| CN | 109962752 | A | 02 July 2019 | None | | | |

Form PCT/ISA/210 (patent family annex) (January 2015)

**EP 4 184 799 A1**